(19) **Europäisches Patentamt**
European Patent Office
Office européen des brevets

(11) **EP 1 657 917 B1**

(12) **EUROPÄISCHE PATENTSCHRIFT**

(45) Veröffentlichungstag und Bekanntmachung des Hinweises auf die Patenterteilung:
**11.04.2007 Patentblatt 2007/15**

(51) Int Cl.:
*H04N 5/44* *(2006.01)*       *H04N 5/46* *(2006.01)*

(21) Anmeldenummer: **05020980.8**

(22) Anmeldetag: **27.09.2005**

(54) **Verfahren und Schaltungsanordnung zur Kanalfilterung analog oder digital modulierter TV-Signale**

Method and circuit arrangement for filtering analog or digital modulated TV signals

Procédé et montage de circuit pour le filtrage de canal de signaux TV à modulation analogique ou numérique

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **12.11.2004 DE 102004054893**

(43) Veröffentlichungstag der Anmeldung:
**17.05.2006 Patentblatt 2006/20**

(73) Patentinhaber: **Micronas GmbH**
**79108 Freiburg i. Br. (DE)**

(72) Erfinder:
• **Temerinac, Miodrag, Dr.**
**79194 Gundelfingen (DE)**
• **Fiesel, Hans**
**79211 Denzlingen (DE)**

(74) Vertreter: **Patentanwälte**
**Westphal, Mussgnug & Partner**
**Am Riettor 5**
**78048 Villingen-Schwenningen (DE)**

(56) Entgegenhaltungen:
**US-A1- 2004 081 257       US-B1- 6 184 921**

EP 1 657 917 B1

## Beschreibung

Die Erfindung betrifft ein Verfahren zur Kanalfilterung analog oder digital modulierter Fernsehsignale nach dem Oberbegriff des Patentanspruchs 1 sowie eine Schaltungsanordnung zur Kanalfilterung analog oder digital modulierter Fernsehsignale nach dem Oberbegriff des Patentanspruchs 19.

Fernsehsignale (TV-Signale) werden auf verschiedenen Frequenzkanälen übertragen. Ein Fernsehempfänger kann (einen Teil) dieser TV-Signale empfangen. Eine im Fernsehempfänger vorhandene Abstimmeinheit, ein sogenannter Tuner, wählt entsprechend einer Vorgabe durch einen Bediener einen Kanal aus und verstärkt diesen. In den meisten Fernsehempfängern wird danach das ausgewählte Fernsehsignal auf eine erste Zwischenfrequenz von ca. 40 MHz umgesetzt (Anmerkung: Diese erste Zwischenfrequenz wird nachfolgend mit ZF abgekürzt). Meist wird an dieser Stelle dieses Zwischenfrequenzsignal einer Bandpass-Filterung mittels Oberflächenwellenfilter unterzogen. Bei manchen Ausführungen eines Fernsehempfängers wird nach einer weiteren im allgemeinen analogen Signalverarbeitung das auf die erste Zwischenfrequenz umgesetzte TV-Signal auf eine zweite Zwischenfrequenz umgesetzt. Diese Umsetzung ist z.B. in der DE 198 25 455 C2 beschrieben. (Anmerkung: Diese zweite Zwischenfrequenz wird nachfolgend zur deutlichen Unterscheidbarkeit mit $2^{nd}$ IF abgekürzt, wobei IF ein Akronym für Intermediate Frequency = Zwischenfrequenz darstellt). Diese zweite Zwischenfrequenz $2^{nd}$ IF ist so gewählt, dass der Bildträger des unteren Nebenkanals zu Nullfrequenz gesetzt ist. Dadurch kann dieser Nebenkanal-Bildträger leicht durch einen analogen Hochpass ausgefiltert werden. Da ebenfalls unerwünschte Mischprodukte der zweiten Umsetzung unterdrückt werden müssen und eine nachfolgende Analog-Digital-Umsetzung so wie so ein Antialiasing Tiefpassfilter benötig, wird dieses Filter gleich als Bandpass ausgeführt. Das dabei erhaltene Signal, welches im allgemeinen als low-IF-Signal oder $2^{nd}$ IF-Signal bezeichnet wird, wird dann einer weiteren vorzugsweise digitalen Signalverarbeitung zugeführt.

Modernere Abstimmeinheiten, sogenannte Silicon Tuner, wie z.B. im Dokument US 2004/0081257, können den Kanal auch direkt auf die low-IF umsetzen oder verwenden als ZF eine wesentlich höhere Frequenz (z.B.: 1.2GHz) und setzen dann auf die low-IF um.

Aus dem Stand der Technik sind eine Vielzahl an Verfahren zur Kanalfilterung eines analog oder digital modulierten TV-Signals eines (von einem Tuner ausgewählten) Kanals mit auf eine Zwischenfrequenz (ZF oder $2^{nd}$ IF) umgesetztem Bildträgersignal, Bildsignal(en), in der Regel zwei Tonträgersignalen und Tonsignal(en) bekannt.

Obwohl sich alle diese Verfahren dem Grunde nach bewährt haben, so benötigen sie doch alle spezielle Übertragungsstandard-abhängige Vorfilter oder es werden im allgemeinen nicht alle Störsignale aus benachbarten Kanälen, insbesondere den oberen und unteren Nebenkanälen, hinreichend wirksam unterdrückt bzw. ausgefiltert, wenn nur ein Vorfilter benutzt werden soll. Des Weiteren müssen bei solchen Verfahren die Vorfilter gänzlich andere Amplitudengänge aufweisen, als die für digitale Fernsehsignale benötigten Vorfilter.

Die Aufgabe der Erfindung besteht daher darin, ein Verfahren sowie eine Schaltungsanordnung zur Kanalfilterung analog oder digital modulierter in eine Zwischenfrequenz umgesetzter TV-Signale vorzustellen, welches bzw. welche Störungen wirksamer unterdrückt und welches die gleiche standardunabhängige Vorfilterung für analog und digital modulierte Fernsehsignale benutzt.

Diese Aufgabe wird bei einem Verfahren der gattungsgemäßen Art durch die Merkmale des kennzeichnenden Teils des Patentanspruchs 1 und bei einer Schaltungsanordnung der gattungsgemäßen Art durch die Merkmale des kennzeichnenden Teils des Patentanspruchs 19 gelöst.

Vorteilhafte Ausführungen und Weiterbildungen der Erfindung sind in den Unteransprüchen angegeben.

Wie oben bereits dargelegt wurde, geht die Erfindung von einem analog oder digital modulierten TV-Signal umfassend ein Bildsignal, ein Tonsignal und ein Bildträgersignal mit einer Bildträgerfrequenz aus, welches auf eine Zwischenfrequenz, ein Zwischenfrequenzsignal bildend, umgesetzt ist. Um Störsignale benachbarter TV-Kanäle zu unterdrücken, und Bild- und Ton-Inhalte zu separieren, ist erfindungsgemäß vorgesehen, das Zwischenfrequenzsignal mit einem Signal mit der Bildträgerfrequenz in ein In-Phase-Signal und mit einem zu dem Signal um einen Phasenwinkel von $\pi/2$ in der Phase verschobenen Signal mit der Bildträgerfrequenz in ein Quadratur-Signal, z.B. mittels eines sogenannten I/Q-Demodulators, zu demodulieren. Das In-Phase-Signal wird weiter erfindungsgemäß mittels eines ersten, eine gerade symmetrische Impulsantwort aufweisenden, zu einem Hilbert-Filterpaar gehörenden Hilbert-Filters gefiltert, um ein hilbertgefiltertes In-Phase-Signal zu erhalten. In ähnlicher Weise wird das Quadratur-Signal mittels eines zweiten, eine ungerade symmetrische Impulsantwort aufweisenden Hilbert-Filters des Hilbert-Filterpaars gefiltert, um ein hilbertgefiltertes Quadratur-Signal zu erhalten. Das hilbertgefilterte Quadratur-Signal wird dann, vorrichtungsmäßig z.B. mit Hilfe eines einfachen Addierers, zu dem hilbertgefilterten In-Phase-Signal addiert, um ein Bildausgangssignal zu erhalten. Alternativ oder zusätzlich ist erfindungsgemäß vorgesehen, das hilbertgefilterte Quadratur-Signal von dem hilbertgefilterten In-Phase-Signal, z.B. mittels eines einfachen Subtrahierers, zu subtrahieren, um ein Tonausgangssignal zu erhalten. Das Filterverfahren bzw. die Filteranordnung kombiniert folglich die Abspaltung des Bildsignals vom Tonsignal mit der Filterung, um in den jeweiligen abgespaltenen Frequenzbereichen für Bild und Ton eine verbesserte Filterung zu erreichen.

Das vorstehend bezeichnete Verfahren bzw. die vorstehend angegebene Schaltungsanordnung eignet sich zur Filterung eines TV-Signals, welches auf eine beliebige Zwischenfrequenz umgesetzt wurde. Darüber hinaus ist es grundsätzlich unerheblich, ob die Filterung in Analogtechnik oder digital durchgeführt wird, wenngleich eine digitale Filterung häufig Vorteile hinsichtlich der Realisierung der gewünschten Filtercharakteristik aufweist.

Insbesondere bei digitaler Filterung ist es günstig, wenn das Zwischenfrequenzsignal, welches der oben beschriebenen I/Q-Demodulation, Hilbertfilterung und nachfolgenden Summenbildung bzw. Differenzbildung unterzogen wird, durch Umsetzung eines Bildträgers aus einem unteren Nebenkanal auf Nullfrequenz gebildet wird, weil sich dadurch möglichst niedrige Signalfrequenzen ergeben und somit die digitale Verarbeitung möglichst langsam ausgeführt werden kann. Dies bedeutet anders ausgedrückt, wenn das vorstehend angegebene $2^{nd}$ IF-Signal oder low-IF-Signal dem erfindungsgemäßen Verfahren unterworfen bzw. mittels der erfindungsgemäßen Schaltungsanordnung gefiltert und in ein Bild- und/oder Tonsignal aufgespalten wird.

Um schon eingangsseitig ein weitgehend störungsfreies Zwischenfrequenzsignal (insbesondere $2^{nd}$ IF-Signal) zu erhalten und um möglichst viele Störsignale von der kritischen Analog-Digital-Umsetzung fern zu halten, sieht die Erfindung vor, das Zwischenfrequenzsignal vor der I/Q-Demodulation bandpasszufiltern. Die erfindungsgemäße Schaltungsanordnung weist zu diesem Zweck einen oder mehrere dem I/Q-Demodulator vorgeschaltete Bandpassfilter auf.

Obwohl grundsätzlich ein Filter für jeden Übertragungsstandard vorgesehen werden könnte, welches jegliche unerwünschte Störungen/Signale unterdrückt, hat es sich als günstiger erwiesen, wenn durch die Bandpassfilterung zumindest und vor allem Störungsreste aus dem unteren Nebenkanal unterdrückt werden. Nach der Bandpassfilterung verbleibende Störungsreste aus dem oberen Nebenband können hier bis zu einem gewissen Grad toleriert werden. Dies hat den Vorteil, dass eine vergleichsweise einfache (und damit kostengünstige) Filterung hinreichend gute Ergebnisse liefert.

Da die Erfindung vorsieht, den unteren Nachbarbildträger auf die Frequenz null umzusetzen, könnten sich noch niederfrequentere Anteile ins Nutzband zurück falten (Spiegelfrequenz der Umsetzung). Daher muß die erfindungsgemäße Anordnung eine Vorrichtung enthalten, die dieses verhindert. Grundsätzlich ist eine Bandpassfilterung vor der Umsetzung oder eine komplexe Umsetzung vorstellbar um die Spiegelfrequenz der Umsetzung zu unterdrücken. Besonders günstig ist, wenn diese Anordnung auch den Bildträger des unteren Nebenkanals unterdrückt. Dafür kann auch nach der Umsetzung in die $2^{nd}$ IF ein analoger Hochpass eingeführt sein, dessen Grenzfrequenz über dem Bildträger des unteren Nebenkanals und unterhalb des Nutzkanals liegt.

Ein digitaler Bandpassfilter kann so ausgeführt sein, dass er einen Durchlassbereich aufweist, welcher sich zwischen einer Frequenz, die größer als die Frequenz ist, auf die der Bildträger des unteren Nebenkanals umgesetzt wurde (was im Falle des $2^{nd}$ IF Signals die Frequenz Null ist) und einer Frequenz, die kleiner als die halbe Abtastfrequenz ist, erstreckt.

Zur weiteren Störsignalunterdrückung ist in besonders vorteilhafter Ausgestaltung der Erfindung vorgesehen, das In-Phase-Signal und/oder das Quadratur-Signal vor der jeweiligen Hilbertfilterung tiefpasszufiltern. Vorrichtungsmäßig ist einem oder beiden oben angegebenen Hilbert-Filtern ein Tiefpassfilter vorgeschaltet.

Die Tiefpassfilter sind so dimensioniert und konfiguriert, dass durch die Tiefpassfilterung des In-Phase-Signals und/oder durch die Tiefpassfilterung des Quadratur-Signals unerwünschte Mischprodukte um die zweite Oberwelle des Bildträgers aus der I/Q-Demodulation unterdrückt werden.

Es hat sich als günstig herausgestellt, wenn der oder die Tiefpassfilter für das In-Phase-Signal bzw. das Quadratursignal eine Übertragungsfunktion mit einem Durchlassbereich aufweist bzw. aufweisen, welcher bzw. welche sich bis zu einer Frequenz erstreckt bzw. erstrecken, die einer Kanalbandbreite des TV-Signals (welche z.B. bei dem PAL-Standard ca. 7 bzw. 8 MHz und bei dem NTSC-Standard ca. 6 MHz beträgt; PAL = Akronym für Phase Alternating Line; NTSC = Akronym für National Television System Committee) entspricht.

Da sich die Mischprodukte innerhalb eines der Kanalbreite entsprechenden Frequenzabstands von der Frequenz der zweiten Oberwelle der Bildträgerfrequenz (entsprechend der doppelten Bildträgerfrequenz) befinden, ist in einer besonders vorteilhaften Ausführungsvariante der Erfindung vorgesehen, dass der bzw. beide Tiefpassfilter für das In-Phase-Signal bzw. das Quadratur-Signal eine Nullstelle bei einer Frequenz aufweist, bzw. aufweisen, die der zweifachen Bildträgerfrequenz abzüglich der Kanalbandbreite entspricht.

Die Hilbertfilter des Hilbert-Filterpaars sind vorteilhafterweise so ausgebildet, dass durch die Hilbertfilterung Störungsprodukte aus einem oberen Nebenkanal unterdrückt werden. Alternativ oder zusätzlich ist erfindungsgemäß vorgesehen bei der Hilbertfilterung die Phasenbeziehung, insbesondere das Vorzeichen, von Bild- und Tonsignalkomponenten in dem In-Phase-Signal und in dem Quadratur-Signal derart aufeinander abzustimmen, dass sich die Separation in das Bildausgangssignal und in das Tonausgangssignal aus der Summe von hilbertgefiltertem In-Phase-Signal und hilbertgefiltertem Quadratursignal bzw. der Differenz aus hilbertgefiltertem In-Phase-Signal und hilbertgefiltertem Quadratursignal ergibt.

Um dieses Ziel zu erreichen kann die Übertragungsfunktion des Hilbertfilters für das In-Phase-Signal beispielsweise einen Durchlassbereich aufweisen, welcher sich bis zu einer oberen Frequenz, die in etwa der Kanalbandbreite entspricht, erstreckt. In gleicher Weise kann auch die Übertragungsfunktion des Hilbertfilters für das Quadratur-Signal einen Durchlassbereich aufweisen, welcher sich bis zu einer oberen Frequenz, die ungefähr der Kanalbandbreite entspricht, erstreckt.

Das Hilbertfilter für das Quadratur-Signal weist ferner z.B. eine Übertragungsfunktion mit einem Durchlassbereich auf, welcher sich bis zu einer unteren Frequenz, die der Restseitenbandbreite entspricht, erstreckt. Unter Restseitenbandbreite versteht man die Breite des Seitenbandes, welches bei der Fernseh-Signal-Übertragung teilweise unterdrückt ist. Innerhalb des Restseitenbandbereiches entsteht im Q-Zweig kein Nutzsignal, weil sich das obere und untere Seitenband gegenseitig aufheben.

Das Hilbertfilter für das Quadratur-Signal ist vorteilhafterweise weiter derart ausgebildet, dass zwischen einer Frequenz, welche einer Bandbreite des Bildsignals (z.B. beträgt die Bandbreite des Bildsignals nach dem PAL-Standard 5 MHz und nach dem NTSC-Standard 4.2 MHz) entspricht und einer Frequenz, welche einer Kanalbandbreite (vgl. oben: nach dem PAL-Standard 7 bzw. 8 MHz und nach dem NTSC-Standard 6 MHz) entspricht, eine Übertragungsfunktion hat, welche gerade das umgekehrte Vorzeichen aufweist, wie die Übertragungsfunktion zwischen der oben angegebenen Restfrequenz und einer Frequenz, welche einer Bandbreite des Bildsignals entspricht.

Zur Unterdrückung vorstehend bereits genannter Störsignale weisen vorzugsweise auch die Übertragungsfunktionen der Hilbertfilter des Hilbert-Filterpaars die gleichen Nullstellen auf wie die vorstehend bereits beschriebenen, den Hilbertfiltern ggf. vorgeschalteten Tiefpassfilter. Insbesondere weist z.B. die Übertragungsfunktion des Hilbertfilters für das In-Phase-Signal eine Nullstelle bei einer Frequenz, die der zweifachen Bildträgerfrequenz abzüglich der Kanalbandbreite entspricht, auf. Auch das Hilbertfilter für das Quadratur-Signal weist in einer bevorzugten Ausführungsvariante der Erfindung alternativ oder zusätzlich eine Nullstelle bei einer Frequenz, die der zweifachen Bildträgerfrequenz abzüglich der Kanalbandbreite entspricht, auf. Zur Trennung von Bild- und Tonsignalen ist es günstig, wenn das Hilbertfilter für das Quadratur-Signal eine Übertragungsfunktion mit einer Nullstelle bei einer Frequenz, welche einer Bandbreite des Bildsignals entspricht, aufweist.

Obwohl mit den o.a. Filteranordnungen bzw. Verfahren weitgehend störungsfreie Ausgangssignale für Ton und Bild erzeugt werden, kann das Tonausgangssignal weiterhin Störungssignalreste enthalten. Diese lassen sich unterdrücken, wenn das durch Subtraktion von hilbertgefiltertem Quadratur-Signal von hilbertgefiltertem In-Phase-Signal gewonnene Tonausgangssignal mittels eines dem Subtrahierer nachgeschalteten Hochpasses noch einmal hochpassgefiltert wird, um ein gefiltertes Tonausgangssignal zu erhalten.

Insbesondere ist der Hochpassfilter vorzugsweise ausgebildet, durch die Hochpassfilterung Störungsreste (insbesondere Tonsignalstörungen) aus einem oberen Nebenkanal zu unterdrücken.

Die Erfindung wird nunmehr anhand der Zeichnung näher beschrieben. Es zeigen:

Figur 1:    ein Ausführungsbeispiel einer erfindungsgemäßen Schaltungsanordnung zur Kanalfilterung analog oder digital modulierter TV-Signale.

Figur 2:    ein Spektrum eines auf eine erste Zwischenfrequenz umgesetzten ZF-Signals (Stand der Technik).

Figur 3:    ein Spektrum eines auf eine zweite Zwischenfrequenz (2nd IF, Zero-IF) umgesetzten 2nd IF-Signals (Stand der Technik) .

Figur 4:    eine I/Q-Demodulation exemplarisch gewählter Spektrallinien eines 2nd IF-Signals

a) 2nd IF-Eingangssignal
b) I- und Q-Komponenten des 2nd IF-Signals nach der I/Q-Demodulation

Figur 5:    eine Hilbertfilterung einer exemplarisch gewählten Spektrallinie einer I- und einer Q-Komponente mittels eines Hilbert-Filterpaars mit Hilbert-Filtern im I- und Q-Signalpfad

a) I- und Q-Komponenten
b) I- und Q-Komponenten nach der Hilbertfilterung

Figur 6:    eine Übertragungsfunktion des dem I/Q-Demodulator vorgeschalteten digitalen Bandpassfilters aus der Schaltungsanordnung nach der Figur 1. Der Bandpassfilter ist ausgebildet, Störungsreste des unteren Nebenkanal Bildträgers zu unterdrücken.

Figur 7:    eine Übertragungsfunktion der dem Hilbert-Filterpaar vorgeschalteten Tiefpassfilter aus der Schaltungsanordnung nach der Figur 1. Die Tiefpassfilter sind ausgebildet, die bei der I/Q-Demodulation erzeugten unerwünschten Mischprodukte um die zweite Oberwelle des Bildträgers zu unterdrücken.

Figur 8:    Übertragungsfunktionen des Hilbertfilterpaars aus der Schaltungsanordnung nach der Figur 1. Das Hilbert-filterpaar ist vorgesehen, Störungsprodukte aus dem oberen Nebenkanal zu unterdrücken und die Vorzeichen von Bild- und Tonsignalen für die Separation richtig einzustellen.

Figur 9:     ein exemplarisch gewähltes Spektrum eines dem Eingang der Schaltungsanordnung nach der Figur 1 zugeführten Zwischenfrequenzsignals.

Figur 10:    das Spektrum des dem Eingang der Schaltungsanordnung nach der Figur 1 zugeführten Zwischenfrequenzsignals nach der eingangsseitigen Bandpassfilterung. Nach der Bandpassfilterung sind Störungsreste des unteren Nebenkanal-Bildträgers unterdrückt.

Figur 11:    die Spektren der In-Phase- und Quadratursignale nach der Demodulation durch den I/Q-Demodulator aus Figur 1. Die In-Phase- und Quadratursignale sind nach der I/Q-Demodulation auf Nullfrequenz gemischt. Durch die Mischung bei der I/Q-Demodulation entstehen (hier nicht dargestellte) Oberwellen des Grundspektrums, welche mit Hilfe der Tiefpassfilter aus Figur 1 unterdrückt werden.

Figur 12:    das Spektrum des hilbertgefilterten In-Phase-Signals.

Figur 13:    das Spektrum des hilbertgefilterten Quadratur-Signals. Das Q-Signal-Spektrum ist für höhere Frequenzen um den Phasenwinkel $\pi$ in der Phase gedreht.

Figur 14:    das Spektrum des Bildausgangssignals.

Figur 15:    das Spektrum des Tonausgangssignals.

Figur 16:    das Spektrum des Tonausgangssignals nach der Hochpassfilterung. Störungsreste der Tonsignale aus dem oberen Nebenkanal sind unterdrückt.

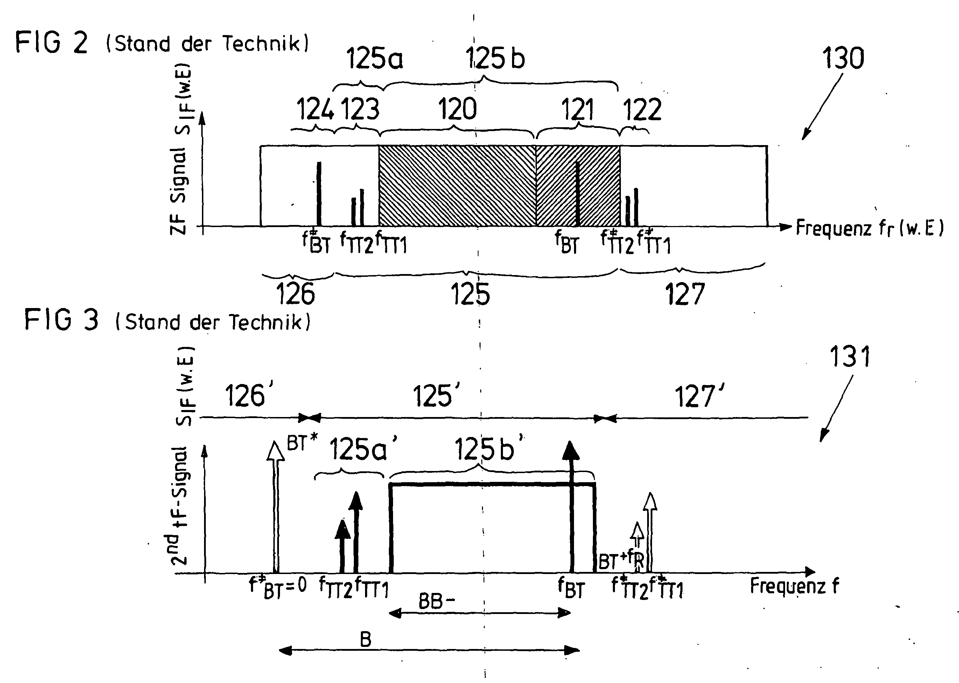

Ausgangspunkt für die nachfolgende Betrachtung ist ein Spektrum eines TV-Signals, welches von einem Tuner entsprechend einer Vorgabe durch einen Bediener ausgewählt, anschließend verstärkt und auf eine erste Zwischenfrequenz umgesetzt wurde. Ein derartiges Frequenzspektrum 130 zeigt die Figur 2. Aufgetragen ist die Amplitude des sogenannten ZF-Signals $S_{ZF}$ über der Frequenz f.

Der Zeichnungsfigur sind im Wesentlichen drei charakteristische Frequenzbereiche zu entnehmen, welche durch die Bezugszeichen 125, 126 und 127 gekennzeichnet sind. Der mit dem Bezugszeichen 125 gekennzeichnete Bereich stellt den Nutzsignalkanal für Bild und Ton des ausgewählten Kanals dar.

Der Nutzsignalkanal 125 verfügt (ebenso wie die unteren und oberen Nebenkanäle) über zwei charakteristische Teilbereiche, nämlich einen Teilbereich bei niedrigen Frequenzen, den sogenannten Tonsignalbereich 125a, und den Teilbereich bei höheren Frequenzen, den sogenannten Bildsignalbereich 125b. Im Tonsignalbereich 125a sind die Spektrallinien des ersten und zweiten Tonträgers bei den beiden Tonträgerfrequenzen $f_{TT1}$ und $f_{TT2}$ eingezeichnet. Dieser Bereich wird allgemein auch als eigener Tonträgerbereich 123 bezeichnet.

Der Bildsignalbereich 125b umfasst den Zweiseitenbandbereich der Videoamplitudenmodulation 121 mit dem in der Zeichnungsfigur dargestellten Bildträger BT bei der Bildträgerfrequenz $f_{BT}$ und den Einseitenbandbereich 120.

Da die Nebenkanäle grundsätzlich die selben Teilbereiche aufweisen, sind in der Zeichnungsfigur auch die entsprechenden Signallinien der bei den Tonträger TT* des oberen Nebenkanals 127 bei den Tonträgerfrequenzen $f_{TT1}$* und $f_{TT2}$* sowie die Spektrallinie des Bildträgers BT* des unteren Nebenkanals 126 bei einer Frequenz $f_{BT}$* eingezeichnet.

Der Vollständigkeit halber sind in der Zeichnungsfigur 2 der angrenzende Tonträgerbereich des oberen Nebenkanals 127 sowie der angrenzende Bildträgerbereich des unteren Nebenkanals 126 mit den Bezugszeichen 122 bzw. 124 gekennzeichnet.

Dieses ZF-Signal-Spektrum wird, wie vorstehend bereits beschrieben wurde, in ein sogenanntes Second IF-Signal $S_{IF}$ umgesetzt. Dieses 2nd IF-Signal $S_{IF}$ zeichnet sich dadurch aus, dass sich der Bildträger BT* des unteren Nebenkanals 126 nunmehr bei Nullfrequenz befindet: $f^*_{BT} = 0$. Das gesamte 2nd IF-Signal-Spektrum, das heißt, das 2nd IF-Signal $S_{IF}$ aufgetragen über der Frequenz f, ist in der Zeichnungsfigur 3 dargestellt und mit Hilfe des Bezugszeichens 131 gekennzeichnet. Zur Vereinfachung der Orientierung sind der eigene Nutzsignalkanal sowie die unteren und oberen Nebenkanäle durch die gestrichenen Bezugszeichensymbole 125', 126' und 127' gekennzeichnet.

Eingezeichnet sind entsprechend den vorstehenden Ausführungen die beiden Teilbereiche für Bild und Ton, nämlich der Bildsignalbereich 125b' sowie der Tonsignalbereich 125a'.

Ebenfalls eingezeichnet sind die bereits vorstehend als charakteristisch angegebenen Spektrallinien des Bildträgers BT* des unteren Nebenkanals 126 bei einer Frequenz $f^*_{BT} = 0$, die beiden eigenen Tonträger TT bei den Frequenzen $f_{TT1}$ und $f_{TT2}$, den eigenen Bildträger BT bei einer Frequenz $f_{BT}$ sowie die beiden Tonträger $TT_1$*, $TT_2$* des

oberen Nebenkanals 127' bei den Frequenzen f*$_{TT1}$ bzw. f*$_{TT2}$.

Die Kanalbandbreite B ist durch den Abstand benachbarter Bildträger BT, BT* vorgegeben. Die Bandbreite des Bildsignals BB ist durch den Übertragungsstandard vorgegeben.

Wie oben bereits dargelegt wurde, ist die derzeitige Signalverarbeitung des von dem Tuner ausgewählten Fernsehsignals eines Kanals nicht hinreichend störungsfrei, um einen Fernsehempfang mit optimaler Bild- und Tonqualität bereitzustellen. Es ergibt sich folgende Problematik:

- Störungsreste BT*, TT* aus den unteren und oberen Nebenkanälen 126, 127 sollen unterdrückt werden.

- Die mit dem Bildträger BT mit einer Bildträgerfrequenz f$_{BT}$ synchron-demodulierten Bild- und Tonsignale sollen auf zwei Ausgängen separat ausgegeben werden.

Ein Ausführungsbeispiel einer erfindungsgemäßen Schaltungsanordnung zur Kanalfilterung analog oder digital modulierter TV-Signale ist in der Zeichnungsfigur 1 dargestellt.

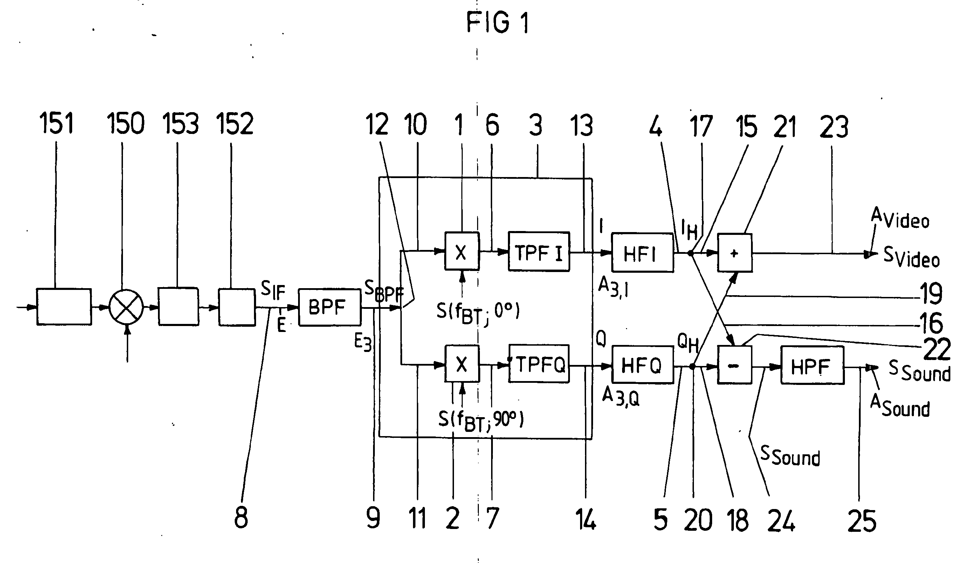

Die Schaltungsanordnung gemäß der Figur 1 umfasst fünf funktionale Blöcke, nämlich einen Vorfilter in Form eines Bandpassfilters BPF, einen I/Q Demodulator 3, ein Hilbertfilterpaar mit den einzelnen Filtern HF-I, HF-Q, eine Recheneinrichtung in Form eines Addierers 21 und eines Subtrahierers 22 zur Separation von Bild- und Tonsignalen sowie ein Nachfilter in Form eines Hochpassfilters HPF.

Der Vollständigkeit halber sind zusätzlich zu der eigentlichen Schaltungsanordnung zur Kanalfilterung die Schaltungsanordnung zur Umsetzung auf die 2$^{nd}$ IF Frequenz sowie entsprechende Vorfilter eingezeichnet. Insbesondere ist ein Multiplizierer 150 dargestellt, der die Umsetzung auf die 2$^{nd}$ IF erzeugt. Dem Multiplizierer 150 ist ein Bandpassfilter 151 vorgeschaltet, welcher die Spiegelfrequenz der Umsetzung unterdrückt. Des Weiteren sind dem Multiplizierer 150 ein Bandpassfilter 153 und ein Analog-Digital-Konverter 152 nachgeschaltet.

Der Bandpassfilter 153 wirkt als Anti-Aliasing-Filter, welcher den Bildträger des unteren Nebenkanals schon vor der Analog-Digital-Umsetzung unterdrückt.

Weiterhin kann ein zusätzlicher (hier nicht dargestellter) Hochpassfilter vorgesehen sein, welcher den Bildträger des unteren Nebenkanals ausfiltert, um die Analog-Digital-Umsetzung zu vereinfachen.

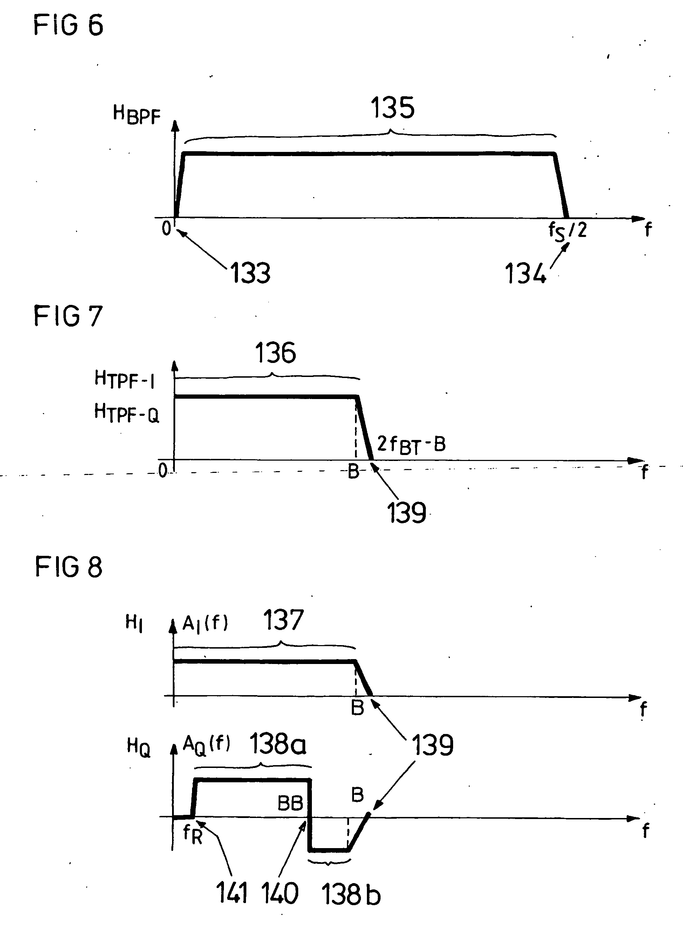

Der Bandpassfilter BPF (welcher mehrere analoge und/oder digitale Filter umfassen kann) mit einer in Figur 6 dargestellten Filtercharakteristik weist einen Eingang zum Zuführen eines Zwischenfrequenzsignals auf.

Der Bandpassfilter BPF ist ausgangsseitig über eine Leitung 8 mit einem Eingang E verbunden. Der Ausgang des Bandpassfilters ist über ein Eingangssignal Pfad 9 mit einem Eingang E$_3$ des I/Q-Demodulators 3 verbunden.

Der im vorliegenden Ausführungsbeispiel digitale Bandpassfilter BPF weist einen Durchlassbereich 135 auf, welcher sich zwischen einer Frequenz f, die größer als die Frequenz 133 (f$_{BT}$=0) ist, auf die der Bildträger BT* des unteren Nebenkanals 126' umgesetzt wurde und einer Frequenz 134, die kleiner als die halbe Abtastfrequenz f$_{s/2\ ist}$, erstreckt. Ferner weist der Bandpassfilter BPF eine Nullstelle 133 bei der Frequenz f$_{BT}$*=0, auf die der Bildträger BT* des unteren Nebenkanals 126' umgesetzt wurde, und eine Nullstelle 134 bei der halben Abtastfrequenz f$_s$/2 auf.

Im I/Q-Demodulator 3 spaltet sich der Eingangssignalpfad 9 in einem Knotenpunkt 12 in zwei Teilsignalpfade 10 und 11 auf. Der Teilsignalpfad 10 ist auf einen Eingang eines einen weiteren Eingang aufweisenden Mischers 1 geführt. Der Ausgang des Mischers 1 ist über einen In-Phase-Signalpfad 6 mit einem Eingang eines ersten Tiefpassfilters TPF-I verbunden, dessen Filtercharakteristik in der Figur 7 dargestellt ist.

Der zweite Eingangssignalpfad 11 ist auf einen Eingang eines zweiten ebenfalls einen weiteren Eingang aufweisenden Mischers 2 geführt. Ein Ausgang des zweiten Mischers 2 ist über einen Quadratur-Signalpfad 7 mit einem Eingang eines zweiten Tiefpassfilters TPF-Q mit ebenfalls in Figur 7 dargestellter Filtercharakteristik verbunden.

Beide Tiefpassfilter TPF-I, TPF-Q weisen im vorliegenden Ausführungsbeispiel dieselbe Filtercharakteristik auf. Der Tiefpassfilter TPF-I für das In-Phasen-Signal I und der Tiefpassfilter TPF-Q für das Quadratursignal Q weisen eine Nullstelle 139 bei einer Frequenz f=2f$_{BT}$-B, die der zweifachen Bildträgerfrequenz 2f$_{BT}$ abzüglich der Kanalbandbreite B entspricht, auf. Der Durchlassbereich 136 erstreckt sich von einer Frequenz f=0 bis zu einer Frequenz f=B, die einer Kanalbandbreite B des TV-Signals entspricht.

Ein Ausgang des ersten Tiefpassfilters TPF-I ist mit einem Eingang des ersten Hilbertfilters HF-I über einen In-Phase-Signalpfad 13 verbunden. In entsprechender Weise ist ein Ausgang des zweiten Tiefpassfilters TPF-Q mit einem Eingang des zweiten Hilbertfilters HF-Q über einen Quadratur-Signalpfad 14 verbunden. Die Filtercharakteristiken der beiden Hilbertfilter HF-I und HF-Q entnimmt man der Figur 8.

Das Hilbertfilter HF-I für das In-Phase-Signal I weist einen Durchlassbereich 137 auf, welcher sich von Nullfrequenz f=0 bis zu einer oberen Frequenz f=B, die der Kanalbandbreite B einspricht, erstreckt. Das Hilbertfilter HF-I für das In-Phase-Signal I weist eine Nullstelle 139 bei einer Frequenz f=2f$_{BT}$-B, die der zweifachen Bildträgerfrequenz 2f$_{BT}$ abzüglich der Kanalbandbreite Entspricht, auf. Das Hilbertfilter HF-Q für das Quadratur-Signal Q weist einen Durchlassbereich 138a, 138b auf, welcher sich um einer weiteren Frequenz f=f$_R$, die einer Restfrequenz f$_R$ entspricht, bis zu einer oberen Frequenz f=B, die der Kanalbandbreite B entspricht, erstreckt.

Während die Übertragungsfunktion $H_Q=A_Q$ zwischen der Restfrequenz $f_R$ und einer Frequenz, welche einer Bandbreite BB des Bildsignals entspricht positives Vorzeichen aufweist, ist die Übertragungsfunktion im übrigen Durchlassbereich 138b invertiert. Das Hilbertfilter HF_Q für das Quadratur-Signal Q weist eine Nullstelle 139 bei einer Frequenz $f=2f_{BT}-B$, die der zweifachen Bildträgerfrequenz $2f_{BT}$ abzüglich der Kanalbandbreite B entspricht und eine Nullstelle 139 bei einer Frequenz $f=BB$, welche einer Bandbreite BB des Bildsignals entspricht, auf.

Ein Ausgang $A_{3,I}$ des ersten Hilbertfilters HF-I ist mit einem In-Phase-Signalpfad 4 verbunden, welcher in einem Knoten 17 in zwei Teilpfade 15 und 16 aufspaltet. In entsprechender Weise ist ein Ausgang $A_{3,Q}$ des zweiten Hilbertfilters HF-Q mit einem Signalpfad 5 verbunden, welcher in einem Knoten 20 in zwei Teilsignalpfade 18 und 19 aufspaltet.

Jeweils einer der von den beiden Hilbertfiltern HF-I, HF-Q ausgehenden Teilsignalpfade 15, 19 bzw. 16, 18 ist mit einem von zwei Eingängen des Addierers 21 bzw. des Subtrahierers 22 verbunden.

Ein Ausgang des Addierers 21 ist über einen Bildausgangssignalpfad 23 mit einem Bildausgang $A_{Video}$ verbunden.

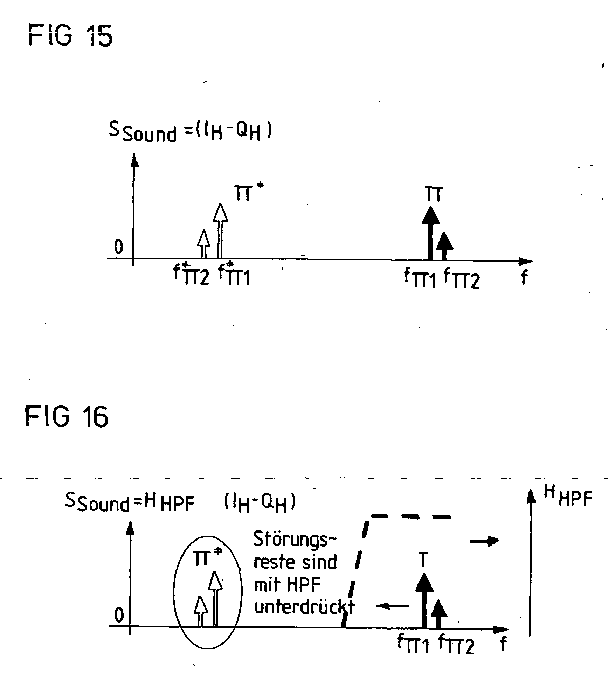

Ein Ausgang des Subtrahierers 22 ist über einen Tonsignalpfad 24 mit einem Eingang des Hochpassfilters HPF mit in Figur 16 skizzierter Filtercharakteristik verbunden. Ein Ausgang des Hochpassfilters HPF ist über einen Tonausgangssignalpfad 25 mit einem Tonausgang $A_{Sound}$ verbunden.

Um die Funktion der Gesamtschaltungsanordnung besser verstehen zu können, werden nachfolgend die Funktionalitäten des I/Q-Demodulators 3 und des Hilbertfilterpaars mit den beiden Hilbertfiltern HF-I und HF-Q anhand einfacher Frequenzspektren erläutert.

I/Q Demodulator:

Es wird angenommen, dass dem Eingang $E_3$ des I/Q Demodulators 3 ein kosinusförmiges Eingangssignal zugeführt wird und dass der I/Q Demodulator 3 dieses kosinusförmige Eingangssignal in eine In-Phase-Komponente I und eine Quadratur-Komponente Q aufteilt, welche an den beiden Ausgängen $A_{3,I}$ bzw. $A_{3,Q}$ des I/Q-Demodulators 3 abgreifbar sind. Konkret werden folgenden Rechenoperationen durchgeführt:

Jede Komponente eines modulierten Eingangssignals, welche sich durch die von der Zeit t abhängige Gleichung:

$$s_{IF}(t) = A \cdot \cos(2\pi(f_{BT} + f)t)$$

beschreiben lässt mit der Amplitude A und auf der Frequenz $f+f_{BT}$ wird in dem I/Q Demodulator 3 frequenzmäßig verschoben, mit einer Drehung auf die I- und Q-Ausgänge gespaltet und gemäß der Position zur Trägerfrequenz $f_{BT}$ mit Plus- oder Minus-Vorzeichen multipliziert und mit den Filtercharakteristiken $H_{TPF-I}$, $H_{TPF-Q}$ tiefpassgefiltert entsprechend den nachfolgend angegebenen Gleichungen:

$$I(t) = H_{TPF-I}\left\{s_{IF}(t) \cdot \cos(2\pi f_{BT} t)\right\} = +\frac{1}{2} A \cdot \cos(2\pi f t) \ \Big\}$$

$$Q(t) = H_{TPF-Q}\left\{s_{IF}(t) \cdot \sin(2\pi f_{BT} t)\right\} = -\frac{1}{2} A \cdot \sin(2\pi f t) \ \Big\}$$

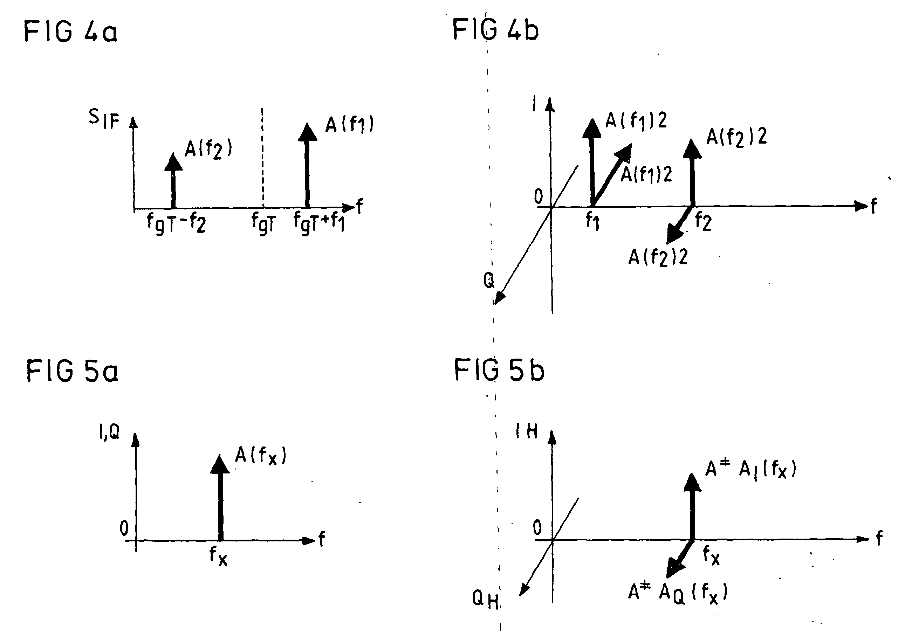

Beispielhaft zeigt die Figur 4 die Spektrallinien eines Eingangssignals $S_{IF}$ bei einer Frequenz $f_2$, welche kleiner als die Bildträgerfrequenz $f_{BT}$ des Bildträgers BT und eines Eingangssignals $S_{IF}$ bei einer Frequenz $f_1$, welche größer als die Bildträgerfrequenz $f_{BT}$ ist (Figur 4a)) und deren Umsetzung in entsprechende In-Phase-Komponenten I und Quadratur-Komponenten Q (Figur 4b)).

Hilbert-Filterpaar:

Ein Hilbert-Filterpaar beinhaltet zwei Filter HF-I und HF-Q mit folgenden Eigenschaften im Frequenzbereich:

1. beide Filter haben einen linearen Phasenübergang; und
2. die Phasenübergänge der zwei Filter HF-I, HF-Q unterscheiden sich um 90°.

Bei einer digitalen Ausführung des Hilbert-Filterpaar lässt sich die gerade-symmetrische Impulsantwort des I-Filters durch die Gleichung

$$h_I(L-n) = h_I(n)$$

und Gleichung die ungerade-symmetrische Impulsantwort des Q-Filters durch die Gleichung

$$h_Q(L-n) = -h_Q(n)$$

beschreiben, wobei L die Filterlänge (in Abtastwerten) und n die Nummer des jeweiligen Filterglieds ist.

Die Übertragungsfunktionen $H_I$, $H_Q$ des bei der Abtastfrequenz fs abtastenden In-Phase-Hilbertfilters HF-I und des bei der Abtastfrequenz $f_s$ abtastenden Quadratur-Hilbertfilters HF-Q im Frequenzbereich ergibt sich aus folgenden Gleichungen:

$$H_I(f) = \sum_{n=0}^{L} h_I(n) \cdot e^{-2j\pi\frac{f}{f_s}n} = e^{-j\pi\frac{fL}{f_s}} \cdot A_I(f), \; wobei$$

wobei

$$A_I(f) = \sum_{n=0}^{L} h_I(n) \cdot \cos\left(\pi\frac{f}{f_s}(L-2n)\right)$$

$$H_Q(f) = \sum_{n=0}^{L} h_Q(n) \cdot e^{-2j\pi\frac{f}{f_s}n} = e^{j\frac{\pi}{2}j\pi\frac{fL}{f_s}} \cdot A_Q(f), \; wobei$$

wobei

$$A_Q(f) = \sum_{n=0}^{L} h_Q(n) \cdot \sin\left(\pi\frac{f}{f_s}(L-2n)\right)$$

Ein sinusförmiges Eingangssignal mit einer Signalamplitude A und einer Frequenz $f_x$ entsprechend Fig. 5 a) wird bei Filterung mit dem In-Phase-Hilbertfilter HF-I in ein sinusförmiges Signal mit der Signalamplitude $A*A_I(f_x)$ und bei Filterung mit dem Quadratur-Hilbertfilter HF-Q in ein um 90° in der Phase verschobenes Signal mit der Amplitude $A*A_R(f_x)$ transformiert (vgl. Fig. 5b)).

Unterwirft man nunmehr ein 2nd-IF-Signal mit dem in Figur 3 dargestettlen singnalspektrum einer Filterung durch die in der Figur 1 gezeigte Schaltungsanordnung, so liegen an den Ein- bzw. Ausgängen der einzelnen Schaltungselemente aus Figur 1 modifizierte Signale an, welche anhand einiger beispielhaft gewählter Spektrallinien mittels der Zeichnungsfiguren 9 bis 14 erläutert werden.

Exemplarisch wird die Spektrallinie des Bildträgers BT* des unteren Nebenkanals, der eigene Tonträger TT, ein exemplarisch ausgewähltes Bildsignal $B_2$ im Einseitenband 120, ein exemplarisch ausgewähltes Bildsignal $B_1$ im Zweiseitenband 121, der eigene Bildträger BT sowie die Tonträger TT* des oberen Nebenkanals 127 betrachtet, wie sie sich beim Durchgang durch den Filter verändern. Der einfachen Bezugnahme wegen und zur Verdeutlichung der lage der einzelnen charakteristischen Spektrallinien sind diese in der Zeichnungsfigur 9 dargestellt.

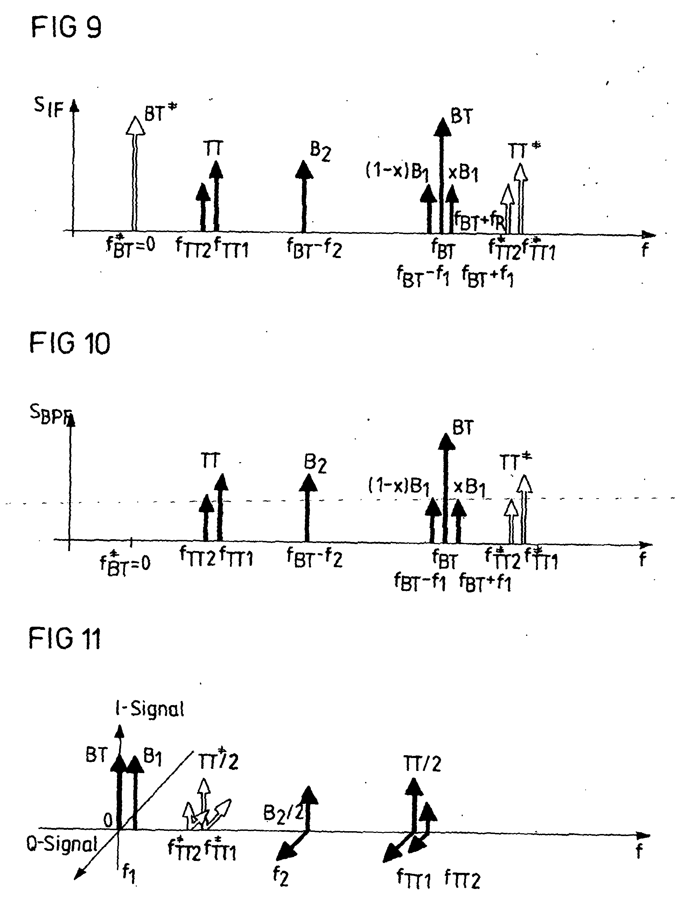

Das 2nd-IF-Signal $S_{IF}$ wird zunächst über den Signalpfad 8 dem Bandpassfilter BPF zugeführt. Im Bandpassfilter mit einer Nullstelle bei einer Frequenz f=0 und bei der halben Abtast-frequenz $f_{s/2}$ weist zwischen seinen beiden Nullstellen einen im Wesentlichen konstaten Amplitudenübergang und damit einhergehend einen linearen Phasenübergang auf. Er ist daher ausgebildet, die Störungsreste aus dem unteren Nebenkanal, insbesondere Störungsreste durch den Bildträger BT* des unteren Nebenkanals auszufiltern. Konkret werden sämtliche vorstehend unter Bezugnahme auf die Figur 9 genannten Spektrallinien in unveränderter Form durchgelassen, außer das Bildträgersignal BT* bei $f_{BT}$*=0. Figur 10 zeigt die nach der Bandpassfilterung verbleibenden charakteristischen Spektrallinien aus Figur 9;

Im IQ-Demodulator 3 wird jede Komponente des bandpassgefilterten Signalspektrums $S_{BPF}$ frequenzmäßig verschoben, mit einer Drehung auf die I- und Q-Ausgänge $A_{3,I}$, $A_{3,Q}$ gespalten und gemäß der Position zur Trägerfrequenz $f_{BT}$ mit plus- oder minus-Vorzeichen multipliziert und anschließend tiefpassgefiltert. Das I-Signal I umfasst nunmehr den Bildträger BT bei einer Frequenz f=0, im Abstand der Bildsignalfrequenz $f_1$ das Bildsignal $B_1$ aus dem Zweiseitenband, mit der halben Amplitude Tonträgersignale TT* aus dem oberen Nebenkanal, mit der halben Amplitude das Bildsignal $B_2$ aus dem Einseitenband bei der Bildfrequenz $f_2$ sowie mit halber Amplitude die eigenen Tonträgersignale TT. Das Quadratur-Signal Q umfasst mit halber Amplitude das Bildsignal aus $B_2$ aus dem Einseitenband bei einer Frequenz $f_2$ sowie die beiden eigenen Tonträgersignale TT mit halber Amplitude. Darüber hinaus sind Störungsreste des Tonträgers TT* des oberen Nebenkanals um 180° in der Phase verschoben und mit halber Amplitude ebenfalls vorhanden. Die bei der Mischung mit der eigenen Bildträgerfrequenz $f_{BT}$ entstehenden Mischprodukte um die zweite Oberwelle des Bildträgers BT wurden mit Hilfe der Tiefpassfilter BPF-I, BPF-Q unterdrückt.

Das In-Phase-Signal I wird nunmehr in einem weiteren Schritt über den Pfad 13 dem Hilbertfilter HF-I zugeführt. Da der Amplitudengang des Hilbertfilters HF-I im interessierenden Bereich im Wesentlichen konstant ist (vgl. Figur 8 oben), wird das In-Phase-Signal I im Wesentlichen unverändert durchgelassen und liegt als hilbertgefiltertes Signal $I_H$ am Ausgang des Hilbertfilter HF-I an. Das Spektrum der ausgewählten Spektrallinien entnimmt man der Zeichnungsfigur 12.

In ähnlicher Weise wird auch das Quadratur-Signal Q dem Hilbertfilter HF-Q zugeführt. Wie sich aus der Figur 8 unten ergibt, werden Spektrallinien bei einer Frequenz unterhalb der Restfrequenz $f_R$ unterdrückt. Spektrallinien zwischen der Restfrequenz $f_R$ und einer Frequenz, welche der Bandbreite des Bildsignals BB entspricht werden unverändert durchgelassen. Signallinien zwischen dieser Frequenz BB und einer Frequenz welcher der Kanalbandbreite B entspricht werden invertiert ist.

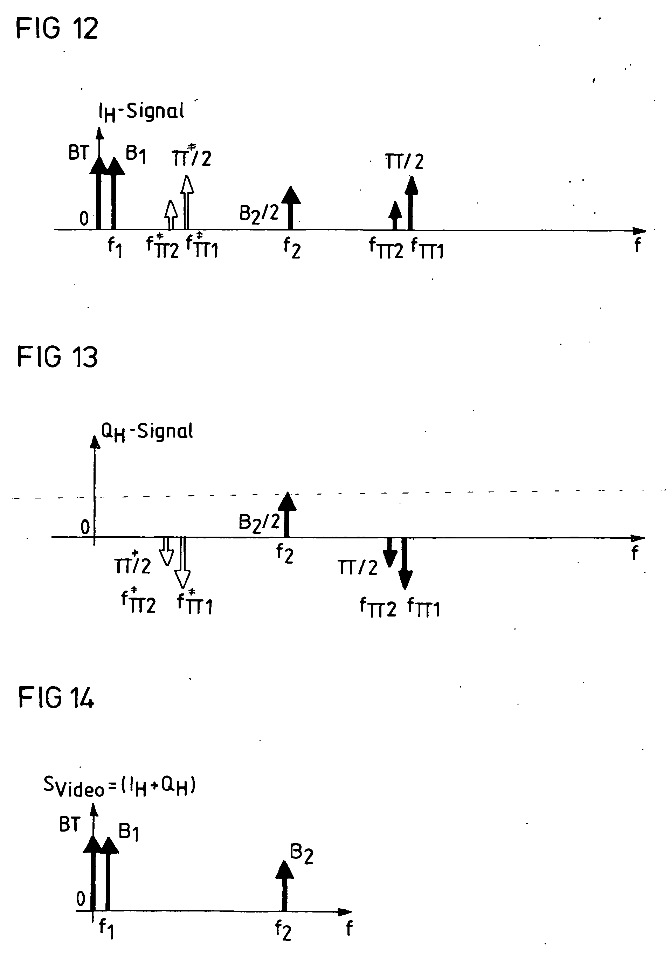

Figur 13 zeigt das Spektrum der ausgewählten charakteristischen Linien des $Q_H$-Signals. Insbesondere entnimmt man der Figur 13, dass kein Bildträgersignal BT des unteren Nebenkanals im Q-Zweig und kein Bildsignal B1 im Q-Zweig des Zweiseitenbandbereiches (Restseitenbandbereich) vorliegt. Im Abstand der Frequenz $f_2$ findet man das Bildsignal $B_2$ aus dem Einseitenband. Dieses liegt wie vorher nur mit halber Signalamplitude vor. Das Tonträgersignal TT ist invertiert und weist die halbe Signalamplitude auf. Ebenfalls in invertierter Form und mit halber Signalamplitude findet sich das Tonträgersignal des oberen Nebenkanals.

Das hilbertgefilterte In-Phase-Signal $I_H$ und das hilbertgefilterte Quadratur-Signal $Q_H$ werden nunmehr mit Hilfe des Addierers 21 addiert und liegen über dem Ausgabepfad 23 am Ausgang $A_{video}$ als Bildsignal $S_{Video}$ an. Figur 14 zeigt die ausgewählten charakteristischen Linien des Signalspektrums nach der Addition des hilbertgefilterten In-Phase-Signals und des hilbertgefilterten Quadratur-Signal $Q_H$. Am Ausgang $A_{Video}$ sind hier lediglich Linien des Bildsignals vorhanden, nämlich der Bildträger BT bei Nullfrequenz, das Bildsignal des Zweiseitenbandes $B_1$ bei einer Frequenz $f_1$ und das Bildsignal $B_2$ des Einseitenbandes bei einer Frequenz $f_2$.

Neben einer Addition wird auch mit Hilfe eines Subtrahierers 22 die Differenz zwischen hilbertgefilterten In-Phase-Signal und hilbertgefilterten Quadratur-Signal $Q_H$ gebildet. Figur 15 zeigt die ausgewählten charakteristischen Linien des Eingangssignalspektrums nach der Figur 9 nach der Subtraktion des hilbertgefilterten Quadratur-Signal $Q_H$, vom hilbertgefilterten In-Phase-Signal $I_H$. Es sind sowohl Tonträger des eigenen Kanals als auch die Tonträger des oberen Nebenkanals zu sehen. Um letztere zu eliminieren, wird das am Ausgang des Subtrahierers 22 ausgegebene Signal $S_{Sound'}$ über den Signalpfad 24 auf einen den vorstehend genannten Hochpassfilter HPF geführt, in dem die Störungsreste des oberen Nebenkanals, nämlich das Tonträgersignal TT* des oberen Nebenkanals, unterdrückt werden. Über den Pfad 25 wird das hochpassgefilterte Differenzsignal aus hilbertgefiltertem In-Phase-Signal $I_H$ und hilbertgefiltertem Quadratur-Signal $Q_H$ als Ausgangssignal $S_{Sound}$ ausgegeben. Im Idealfall verbleiben als Ausgangssignal $S_{Sound}$ am Tonsignalausgang $A_{Sound}$ lediglich die Tonsignale übrig, welche sich durch die beiden Tonträgersignale TT manifestieren.

Bezugszeichenliste

1    Mischer
2    Mischer
3    I/Q-Demodulator
4    In-Phase-Signalpfad
5    Quadratur Signalpfad
6    In-Phase-Signalpfad

| | |
|---|---|
| 7 | Quadratur-Signalpfad |
| 8 | Eingangssignalpfad |
| 9 | Eingangssignalpfad |
| 10 | erster Eingangssignalpfad |
| 11 | zweiter Eingangssignalpfad |
| 12 | Knoten |
| 13 | In-Phase-Signalpfad |
| 14 | Quadratur-Signalpfad |
| 15 | erster In-Phase-Signalpfad |
| 16 | zweiter In-Phase-Signalpfad |
| 17 | Knoten |
| 18 | erster Quadratur-Signalpfad |
| 19 | zweiter Quadratur-Signalpfad |
| 20 | Knoten |
| 21 | Addierer |
| 22 | Subtrahierer |
| 23 | Bildausgangssignalpfad |
| 24 | Tonausgangssignalpfad |
| 25 | Tonausgangssignalpfad |

| | |
|---|---|
| 120 | Einseitenbandbereich |
| 121 | Zweiseitenbandbereich der Video Amplituden Modulation |
| 122 | angrenzender Tonträgerbereich |
| 123 | eigener Tonträgerbereich |
| 124 | angrenzender Bildträgerbereich |
| 125, 125' | Nutzsignalkanal Bild und Ton |
| 126, 126' | unterer Nebenkanal |
| 127, 127' | oberer Nebenkanal |
| 125a, 125a | Tonsignalbereich |
| 126, 126b | Bildsignalbereich |
| 130 | Frequenzspektrum des ZF-Signals |
| 131 | Frequenzspektrum des $2^{nd}$ IF-Signals |
| 132' | Nyquist-Flake |
| 133 | Nullstelle |
| 134 | Nullstele |
| 135 | Durchlassbereich |
| 136 | Durchlassbereich |
| 137 | Durchlassbereich |
| 138a, | 138b Durchlassbereich, Durchlassphasenbereich |
| 139 | Nullstelle |
| 140 | Nullstelle |
| 141 | Nullstelle |
| 150 | Multiplizierer |
| 151 | Bandpaßfilter |
| 152 | Analog-Digital-Umsetzer |
| 153 | Bandpaßfilter |

| | |
|---|---|
| I | In-Phase-Komponente |
| Q | Quadratur-Komponente |

| | |
|---|---|
| B | Kanalbandbreite |
| BB | Bandbreite des Bildsignals |
| BT | Amplitude des Bildträgers |
| BT* | Amplitude des Bildträgers des Nebenkanals |
| TT | Tonträger |
| TT* | Tonträger des Nebenkanals |

| | |
|---|---|
| BPF | Bandpassfilter |

TPF I     Tiefpassfilter für In-Phase-Komponente
TPF Q     Tiefpassfilter für Quadratur-Komponente
HF I      Hilbertfilter für In-Phase-Komponente
HF Q      Hilbertfilter für Quadratur-Komponente
$E_3$     Eingang des I/Q-Demodulators
$A_{3,I}$     In-Phase-Ausgang des I/Q-Demodulators
$A_{3,Q}$     Quadratur-Ausgang des I/Q-Demodulators
$h_I$     Impulsantwort des In-Phase-Hilbert-Filters
$h_Q$     Impulsantwort des Quadratur-Hilbert-Filters

L     Anzahl der Abtastwerte
n     Nummer des Abtastwerts

$H_I$     Übertragungsfunktion des In-Phase-HilbertFilters
$H_Q$     Übertragungsfunktion des Quadratur-Hilbert-Filters

$H_{BPF}$     Übertragungsfunktion des Bandpassfilters
$H_{TPF-I}$     Übertragungsfunktion des Tiefpassfilters für die In-Phase-Komponente
$H_{TPF-Q}$     Übertragungsfunktion des Tiefpassfilters für die Quardra tur-Komponente
$H_{HPF}$     Übertragungsfunktion des Hochpassfilters

s ($f_{BT}$,     0°) Signal
s($f_{BT}$,     90°) 90°- Phasen verschobenes Signal

ZF     Zwischenfrequenz
IF     Intermediale Frequenz/Zwischenfrequenz
$f_s$     Abtastfrequenz
$f_R$     Restfrequenz
f     Frequenz
$f_1$     Frequenz
$f_2$     Frequenz
f*     Frequenz
$f_{BT}$     Bildträgerfrequenz
$f_{TT1}$     erste Tonträgerfrequenz
$f_{TT2}$     zweite Tonträgerfrequenz
$f_{BT}*$     Bildträgerfrequenz eines anderen Kanals
$f*_{TT1}$     erste Tonträgerfrequenz eines anderen Kanals
$f*_{TT2}$     zweite Tonträgerfrequenz eines anderen Kanals
$S_{IF}$     Eingangssignal /2$^{nd}$ IF-Signal
$S_{Video}$     Bildausgangssignal
$S_{Sound}$     Tonausgangssignal
$S_{BPF}$     bandpassgefiltertes 2$^{nd}$ IF-Signal
E     Eingang
$A_{Video}$     Bildausgang
$A_{Sound}$     Tonausgang
A     Amplitude
$A(f_1)$     Amplitude
$A(f_2)$     Amplitude

**Patentansprüche**

1. Verfahren zur Kanalfilterung eines analog oder digital modulierten TV-Signals (125) umfassend ein Bildsignal (125b), ein Tonsignal (125a) und ein Bildträgersignal (BT) mit einer Bildträgerfrequenz ($f_{BT}$), bei dem das TV-Signal (125) auf eine Zwischenfrequenz (2$^{nd}$ IF) ein Zwischenfrequenzsignal ($S_{IF}$) bildend umgesetzt wird,
**dadurch gekennzeichnet, dass**
das Zwischenfrequenzsignal ($S_{IF}$) mit einem Signal (S ($f_{BT}$; 0°)) mit der Bildträgerfrequenz ($f_{BT}$) in ein In-Phase-Signal (I) und mit einem zu dem Signal (S($f_{BT}$; 0°)) um einen Phasenwinkel von $\pi/2$ in der Phase verschobenen Signal ($S(f_{BT}; 90°)$) mit der Bildträgerfrequenz ($f_{BT}$) in ein Quadratur-Signal (Q) I/Q-demoduliert wird, dass das In-Phase-Signal (I) mittels eines ersten, eine gerade symmetrische Impulsantwort ($h_I(L-n)=h_I(n)$) aufweisenden Hilbert-Filters (HF-I) eines Hilbert-Filterpaars (HF-I, HF-Q) gefiltert wird, um ein hilbertgefiltertes In-Phase-Signal ($I_H$) zu erhalten, und dass das Quadratur-Signal (Q) mittels eines zweiten, eine ungerade symmetrische Impulsantwort ($h_Q(L-n)=-h_Q(n)$) aufweisenden Hilbert-Filters (HF-Q) des Hilbert-Filterpaars (HF-I, HF-Q) gefiltert wird, um ein hilbertgefiltertes Quadratur-Signal ($Q_H$) zu erhalten, dass das hilbertgefilterte Quadratur-Signal ($Q_H$) zu dem hilbertgefilterten In-Phase-Signal ($I_H$) addiert wird, um ein Bildausgangssignal ($S_{Video}$) zu erhalten und/oder dass das hilbertgefilterte Quadratur-Signal ($Q_H$) von dem hilbertgefilterten In-Phase-Signal ($I_H$) subtrahiert wird, um ein Tonausgangssignal ($S_{Sound}$') zu erhalten.

2. Verfahren nach Anspruch 1,
   **dadurch gekennzeichnet, dass**
   das Zwischenfrequenzsignal ($S_{IF}$) durch Umsetzung eines Bildträgers (BT*) aus einem unteren Nebenkanal (126, 126') auf Nullfrequenz ($f_{BT}^*=0$) gebildet wird.

3. Verfahren nach einem der Ansprüche 1 oder 2,
   **dadurch gekennzeichnet, dass**
   das Zwischenfrequenzsignal ($S_{IF}$) vor der I/Q-Demodulation bandpassgefiltert wird.

4. Verfahren nach Anspruch 3,
   **dadurch gekennzeichnet, dass**
   die Bandpassfilterung digital mit einer Abtastfrequenz ($f_s$) durchgeführt wird.

5. Verfahren nach einem der Ansprüche 3 oder 4,
   **dadurch gekennzeichnet, dass**
   durch die Bandpassfilterung Störungsreste ($f_{BT}^*$) aus dem unteren Nebenkanal (126') unterdrückt werden.

6. Verfahren nach Anspruch 5,
   **dadurch gekennzeichnet, dass**
   die Bandpassfilterung einen Durchlassbereich (135) aufweist, welcher sich zwischen einer Frequenz (f), die größer als die Frequenz ($f_{BT}^*=0$ ; 133) ist, auf die der Bildträger (BT*) des unteren Nebenkanals (126') umgesetzt wurde und einer Frequenz (f), die kleiner als die halbe Abtastfrequenz ($f_s/2$ ; 134) ist, erstreckt.

7. Verfahren nach einem der Ansprüche 5 oder 6,
   **dadurch gekennzeichnet, dass**
   die Bandpassfilterung eine Nullstelle (133) bei der Frequenz ($f_{BT}^*=0$), auf die der Bildträger (BT*) des unteren Nebenkanals (126') umgesetzt wurde, aufweist und/oder dass die Bandpassfilterung eine Nullstelle (134) bei der halben Abtastfrequenz ($f_s/2$) aufweist.

8. Verfahren nach einem der vorangegangenen Ansprüche,
   **dadurch gekennzeichnet, dass**
   das In-Phase-Signal (I) vor der Hilbertfilterung tiefpassgefiltert wird und/oder dass das Quadratur-Signal (Q) vor der Hilbertfilterung tiefpassgefiltert wird.

9. Verfahren nach Anspruch 8,
   **dadurch gekennzeichnet, dass**
   durch die Tiefpassfilterung des In-Phase-Signals (I) und/oder die Tiefpassfilterung des Quadratur-Signals (Q) unerwünschte Mischprodukte um die zweite Oberwelle des Bildträgers ($f_{BT}$) aus der 1/Q-Demodulation unterdrückt werden.

10. Verfahren nach Anspruch 9,
    **dadurch gekennzeichnet, dass**
    die Tiefpassfilterung des In-Phase-Signals (I) einen Durchlassbereich (136) aufweist, welcher sich bis zu einer Frequenz (f) erstreckt, die einer Kanalbandbreite (B) des TV-Signals entspricht und/oder dass die Tiefpassfilterung des Quadratur-Signals (Q) einen Durchlassbereich (136) aufweist, welcher sich bis zu einer Frequenz (f) erstreckt, die einer Kanalbandbreite (B) des TV-Signals entspricht.

11. Verfahren nach einem der Ansprüche 9 oder 10,

**dadurch gekennzeichnet, dass**
die Tiefpassfilterung des In-Phase-Signals (I) eine Nullstelle (139) bei einer Frequenz ($2f_{BT}$-B), die der zweifachen Bildträgerfrequenz ($2f_{BT}$) abzüglich der Kanalbandbreite (B) entspricht, aufweist.

**12.** Verfahren nach einem der vorangegangenen Ansprüche,
**dadurch gekennzeichnet, dass**
durch die Hilbertfilterung Störungsprodukte aus einem oberen Nebenkanal (127') unterdrückt werden und/oder dass die Phasenbeziehung, insbesondere das Vorzeichen, von Bild- und Tonsignalkomponenten in dem In-Phase-Signal (I) und in dem Quadratur-Signal (G) derart aufeinander abgestimmt wird, dass sich die Separation in das Bildausgangssignal ($S_{Video}$) und in das Tonausgangssignal ($S_{Sound}$) aus der Summe von hilbertgefiltertem In-Phase-Signal ($I_H$) und hilbertgefiltertem Quadratursignal ($Q_H$) bzw. der Differenz aus hilbertgefiltertem In-Phase-Signal ($I_H$) und hilbertgefiltertem Quadratursignal ($Q_H$) ergibt.

**13.** Verfahren nach Anspruch 12,
**dadurch gekennzeichnet, dass**
die Hilbertfilterung des In-Phase-Signals (I) einen Durchlassbereich (137) aufweist, welcher sich bis zu einer oberen Frequenz (f), die der Kanalbandbreite (B) entspricht, erstreckt und/oder dass die Hilbertfilterung des Quadratur-Signals (Q) einen Durchlassbereich (138a, 138b) aufweist, welcher sich bis zu einer oberen Frequenz (f), die der Kanalbandbreite (B) entspricht, erstreckt.

**14.** Verfahren nach Anspruch 12 oder 13,
**dadurch gekennzeichnet, dass**
die Hilbertfilterung des Quadratur-Signals (Q) einen Durchlassbereich (138a, 138b) aufweist, welcher sich bis zu einer unteren Frequenz (f), die einer Restbandbreite ($f_R$) entspricht, erstreckt.

**15.** Verfahren nach Anspruch 14,
**dadurch gekennzeichnet, dass**
die Hilbertfilterung des Quadratur-Signals (Q) zwischen einer Frequenz, welche einer Bandbreite (BB) des Bildsignals entspricht und einer Frequenz, welche einer Kanalbandbreite (B) entspricht, eine Übertragungsfunktion ($H_Q$=-$A_Q$) mit umgekehrtem Vorzeichen aufweist, wie die Übertragungsfunktion ($H_Q$=$A_Q$) zwischen der Restfrequenz ($f_R$) und einer Frequenz, welche einer Bandbreite (BB) des Bildsignals entspricht.

**16.** Verfahren nach einem der Ansprüche 12 bis 15,
**dadurch gekennzeichnet, dass**
die Hilbertfilterung des In-Phase-Signals (I) eine Nullstelle (139) bei einer Frequenz ($2f_{BT}$-B), die der zweifachen Bildträgerfrequenz ($2f_{BT}$) abzüglich der Kanalbandbreite (B) entspricht, aufweist und/oder dass die Hilbertfilterung des Quadratur-Signals (Q) eine Nullstelle (139) bei einer Frequenz ($2f_{BT}$-B), die der zweifachen Bildträgerfrequenz ($2f_{BT}$) abzüglich der Kanalbandbreite (B) entspricht, aufweist und/oder dass die Hilbertfilterung des Quadratur-Signals (Q) eine Nullstelle (139) bei einer Frequenz, welche einer Bandbreite (BB) des Bildsignals entspricht, aufweist.

**17.** Verfahren nach einem der vorangegangenen Ansprüche,
**dadurch gekennzeichnet, dass**
das Tonausgangssignal ($S_{Sound}$') hochpassgefiltert wird, um ein gefiltertes Tonausgangssignal ($S_{Sound}$) zu erhalten.

**18.** Verfahren nach Anspruch 17,
**dadurch gekennzeichnet, dass**
durch die Hochpassfilterung Störungsreste (TT*) aus einem unteren Nebenkanal (126') unterdrückt werden.

**19.** Schaltungsanordnung zur Kanalfilterung eines analog oder digital modulierten TV-Signals (125) umfassend ein Bildsignal (125b), ein Tonsignal (125a) und ein Bildträgersignal (BT) mit einer Bildträgerfrequenz ($f_{BT}$), bei dem das TV-Signal (125) auf eine Zwischenfrequenz (2$^{nd}$ IF) ein Zwischenfrequenzsignal ($S_{IF}$) bildend umgesetzt ist,
**dadurch gekennzeichnet, dass**
ein I/Q-Demodulator (3) vorgesehen ist, welcher ausgebildet ist, das Zwischenfrequenzsignal ($S_{IF}$) mit einem Signal ($S(f_{BT}$; 0°)) mit der Bildträgerfrequenz ($f_{BT}$) in ein In-Phase-Signal (I) und mit einem zu dem Signal ($S(f_{BT}$; 0°)) um einen Phasenwinkel von n/2 in der Phase verschobenen Signal ($S(f_{BT}$; 90°)) mit der Bildträgerfrequenz ($f_{BT}$) in ein Quadratur-Signal (Q) zu demodulieren, dass ein Hilbert-Filterpaar (HF-I, HF-Q) mit einem ersten, eine gerade symmetrische Impulsantwort ($h_I$(L-n)=$h_I$(n)) aufweisenden Hilbert-Filter (HF-I) und einem zweiten, eine ungerade symmetrische Impulsantwort ($h_Q(L-n)=-h_Q(n)$) aufweisenden Hilbert-Filter (HF-Q) vorgesehen ist, wobei der erste Hilbert-Filter (HF-I) ausgebildet ist, das In-Phase-Signal (I) zu filtern, um ein hilbertgefiltertes In-Phase-Signal ($I_H$) zu erhalten und wobei der zweite Hilbert-Filter (HF-Q) ausgebildet ist, das Quadratur-Signal (Q) zu filtern, um ein hilbertgefiltertes Quadratur-Signal ($Q_H$) zu erhalten, dass ein Addierer (21) vorgesehen ist, welcher ausgebildet ist, das hilbertgefilterte Quadratur-Signal ($Q_H$) zu dem hilbertgefilterten In-Phase-Signal ($I_H$) zu addieren, um ein Bildausgangssignal ($S_{Video}$) zu erhalten und/oder dass ein Subtrahierer (22) vorgesehen ist, welcher ausgebildet ist, das hilbertgefilterte Quadratur-Signal ($Q_H$) von dem hilbertgefilterten In-Phase-Signal ($I_H$) zu subtrahieren, um ein Tonausgangssignal ($S_{Sound}'$) zu erhalten.

**20.** Schaltungsanordnung nach Anspruch 19,
**dadurch gekennzeichnet, dass**
Mittel vorgesehen sind, um das Zwischenfrequenzsignal ($S_{IF}$) durch Umsetzung eines Bildträgers (BT*) aus einem unteren Nebenkanal (126, 126') auf Nullfrequenz ($f_{BT}*=0$) zu bilden.

**21.** Schaltungsanordnung nach einem der Ansprüche 19 oder 20,
**dadurch gekennzeichnet, dass**
dem I/Q-Demodulator (3) ein Bandpassfilter (BPF) vorgeschaltet ist, um das Zwischenfrequenzsignal ($S_{IF}$) vor der I/Q-Demodulation bandpasszufiltern.

**22.** Schaltungsanordnung nach Anspruch 21,
**dadurch gekennzeichnet, dass**
der Bandpassfilter (BPF) ausgebildet ist, die Bandpassfilterung digital mit einer Abtastfrequenz ($f_s$) durchzuführen.

**23.** Schaltungsanordnung nach einem der Ansprüche 21 oder 22,
**dadurch gekennzeichnet, dass**
der Bandpassfilter (BPF) ausgebildet ist, Störungsreste ($f_{BT}*$) aus dem unteren Nebenkanal (126') zu unterdrücken.

**24.** Schaltungsanordnung nach Anspruch 23,
**dadurch gekennzeichnet, dass**
der Bandpassfilter (BPF) einen Durchlassbereich (135) aufweist, welcher sich zwischen einer Frequenz (f), die größer als die Frequenz ($f_{BT}*=0$; 133) ist, auf die der Bildträger (BT*) des unteren Nebenkanals (126') umgesetzt wurde und einer Frequenz (f), die kleiner als die halbe Abtastfrequenz ($f_s/2$; 134) ist, erstreckt.

**25.** Schaltungsanordnung nach einem der Ansprüche 23 oder 24,
**dadurch gekennzeichnet, dass**
der Bandpassfilter (BPF) eine Nullstelle (133) bei der Frequenz ($f_{BT}*=0$), auf die der Bildträger (BT*) des unteren Nebenkanals (126') umgesetzt wurde, aufweist und/oder dass der Bandpassfilter (BPF) eine Nullstelle (134) bei der halben Abtastfrequenz ($f_s/2$) aufweist.

**26.** Schaltungsanordnung nach einem der Ansprüche 19 bis 25,
**dadurch gekennzeichnet, dass**
ein Tiefpassfilter (TPF-I) vorgesehen ist, welcher ausgebildet ist, das In-Phase-Signal (I) vor der Hilbertfilterung tiefpasszufiltern und/oder dass ein Tiefpassfilter (TPF-Q) vorgesehen ist, welcher ausgebildet ist, das Quadratur-Signal (Q) vor der Hilbertfilterung tiefpasszufiltern.

**27.** Schaltungsanordnung nach Anspruch 26,
**dadurch gekennzeichnet, dass**
der Tiefpassfilter (TPF-I) für das In-Phase-Signal (I) und/oder der Tiefpassfilter (TPF-Q) für das Quadratur-Signals (Q) ausgebildet ist, unerwünschte Mischprodukte um die zweite Oberwelle des Bildträgers ($f_{BT}$) aus der I/Q-Demodulation zu unterdrücken.

**28.** Schaltungsanordnung nach Anspruch 27,
**dadurch gekennzeichnet, dass**
der Tiefpassfilter (TPF-I) für das In-Phase-Signal (I) einen Durchlassbereich (136) aufweist, welcher sich bis zu einer Frequenz (f) erstreckt, die einer Kanalbandbreite (B) des TV-Signals entspricht und/oder dass der Tiefpassfilter (TPF-Q) für das Quadratur-Signal (Q) einen Durchlassbereich (136) aufweist, welcher sich bis zu einer Frequenz (f) erstreckt, die einer Kanalbandbreite (B) des TV-Signals entspricht.

**29.** Schaltungsanordnung nach einem der Ansprüche 27 oder 28,
**dadurch gekennzeichnet, dass**
der Tiefpassfilter (TPF-1) für das In-Phase-Signal (I) eine Nullstelle (139) bei einer Frequenz ($2f_{BT}$-B), die der zweifachen Bildträgerfrequenz ($2f_{BT}$) abzüglich der Kanalbandbreite (B) entspricht, aufweist.

**30.** Schaltungsanordnung nach einem der Ansprüche 19 bis 29,
**dadurch gekennzeichnet, dass**
das Hilbertfilterpaar (HF-I, HF-Q) ausgebildet ist, Störungsprodukte aus einem oberen Nebenkanal (127') zu unterdrücken und/oder dass das Hilbertfilterpaar (HF-I, HF-Q) ausgebildet ist, die Phasenbeziehung, insbesondere das Vorzeichen, von Bild- und Tonsignalkomponenten in dem In-Phase-Signal (I) und in dem Quadratur-Signal (G) derart aufeinander abzustimmen, dass sich die Separation in das Bildausgangssignal ($S_{Video}$) und in das Tonausgangssignal ($S_{Sound}$) aus der Summe von hilbertgefiltertem In-Phase-Signal ($I_H$) und hilbertgefiltertem Quadratursignal ($Q_H$) bzw. der Differenz aus hilbertgefiltertem In-Phase-Signal ($I_H$) und hilbertgefiltertem Quadratursignal ($Q_H$) ergibt.

**31.** Schaltungsanordnung nach Anspruch 30,
**dadurch gekennzeichnet, dass**
das Hilbertfilter (HF-I) für das In-Phase-Signal (I) einen Durchlassbereich (137) aufweist, welcher sich bis zu einer oberen Frequenz (f), die der Kanalbandbreite (B) entspricht, erstreckt und/oder dass das Hilbertfilter (HF-Q) für das Quadratur-Signal (Q) einen Durchlassbereich (138a, 138b) aufweist, welcher sich bis zu einer oberen Frequenz (f), die der Kanalbandbreite (B) entspricht, erstreckt.

**32.** Schaltungsanordnung nach Anspruch 30 oder 31,
**dadurch gekennzeichnet, dass**
das Hilbertfilter (HF-Q) für das Quadratur-Signal (Q) einen Durchlassbereich (138a, 138b) aufweist, welcher sich bis zu einer unteren Frequenz (f), die einer Restfrequenz ($f_R$) entspricht, erstreckt.

**33.** Schaltungsanordnung nach Anspruch 32,
**dadurch gekennzeichnet, dass**
das Hilbertfilter (HF-Q) für das Quadratur-Signal (Q) zwischen einer Frequenz, welche einer Bandbreite (BB) des Bildsignals entspricht und einer Frequenz, welche einer Kanalbandbreite (B) entspricht, eine Übertragungsfunktion ($H_Q$=-$A_Q$) mit umgekehrtem Vorzeichen aufweist, wie die Übertragungsfunktion ($H_Q$=$A_Q$) zwischen der Restfrequenz ($f_R$) und einer Frequenz, welche einer Bandbreite (BB) des Bildsignals entspricht.

**34.** Schaltungsanordnung nach einem der Ansprüche 30 bis 33,
**dadurch gekennzeichnet, dass**
das Hilbertfilter (HF-I) für das In-Phase-Signal (I) eine Nullstelle (139) bei einer Frequenz ($2f_{BT}$-B), die der zweifachen Bildträgerfrequenz ($2f_{BT}$) abzüglich der Kanalbandbreite (B) entspricht, aufweist und/oder dass das Hilbertfilter (HF-Q) für das Quadratur-Signals (Q) eine Nullstelle (139) bei einer Frequenz ($2f_{BT}$-B), die der zweifachen Bildträgerfrequenz ($2f_{BT}$) abzüglich der Kanalbandbreite (B) entspricht, aufweist und/oder dass das Hilbertfilter (HF-Q) für das Quadratur-Signals (Q) eine Nullstelle (139) bei einer Frequenz, welche einer Bandbreite (BB) des Bildsignals entspricht, aufweist.

**35.** Schaltungsanordnung nach einem der Ansprüche 19 bis 34,
**dadurch gekennzeichnet, dass**
ein Hochpassfilter (HPF) vorgesehen ist, welches ausgebildet ist, das Tonausgangssignal ($S_{Sound}$') hochpasszufiltern, um ein gefiltertes Tonausgangssignal ($S_{Sound}$) zu erhalten.

**36.** Schaltungsanordnung nach Anspruch 35,
**dadurch gekennzeichnet, dass**
das Hochpassfilter (HPF) ausgebildet ist, Störungsreste (TT*) aus einem unteren Nebenkanal (126') zu unterdrücken.

**Claims**

**1.** A method for channel filtering of an analoguely or digitally modulated TV signal (125), comprising a video signal (125b), a sound signal (125a), and a video carrier signal (BT) having a video carrier frequency ($f_{BT}$) at which the TV signal (125) is converted to an intermediate frequency ($2^{nd}$ IF) generating an intermediate frequency signal ($S_{IF}$),

**characterised in that** the intermediate frequency ($S_{IF}$) is I/Q-demodulated with a signal ($S(f_{BT}$ ; 0°)) at the video carrier frequency ($f_{BT}$) into an in-phase signal (I), and with a signal ($S(f_{BT}$ ; 90°)) shifted in phase by a phase angle $\pi/2$ relative to the signal ($S(f_{BT}$ ; 0°)) [and] at the video carrier frequency ($f_{BT}$) into a quadrature signal (Q) ;

**in that** the in-phase signal (I) is filtered by a first Hilbert filter (HF-I) of a Hilbert filter pair (HF-I, HF-Q) having an even symmetrical pulse response ($h_I(L-n)=h_I(n)$) in order to obtain a Hilbert-filtered in-phase signal ($I_H$);

**and in that** the quadrature signal (Q) is filtered by a second Hilbert filter (HF-Q) of the Hilbert filter pair (HF-I, HF-Q) having an uneven symmetrical pulse response ($h_Q(L-n)=-h_Q(n)$ in order to obtain a Hilbert-filtered quadrature signal ($Q_H$);

**in that** the Hilbert-filtered quadrature signal ($Q_H$) is added to the Hilbert-filtered in-phase signal ($I_H$) in order to obtain a video output signal ($S_{video}$) :

**and/or in that** the Hilbert-filtered quadrature signal ($Q_H$) is subtracted from the Hilbert-filtered in-phase signal ($I_H$) in order to obtain a sound output signal ($S_{sound}$').

**2.** A method according to Claim 1,
**characterised in that** the intermediate frequency signal ($S_{IF}$) is generated by converting a video carrier (BT*) from a lower auxiliary channel (126, 126') to zero frequency ($f_{BT}$*=0) .

**3.** A method according to one of Claims 1 or 2,
**characterised in that** the intermediate frequency signal ($S_{IF}$) is bandpass-filtered prior to the I/Q demodulation.

**4.** A method according to Claim 3,
**characterised in that** the bandpass filtering is implemented digitally at a sampling frequency ($f_s$).

**5.** A method according to one of Claims 3 or 4,
**characterised in that** the bandpass filtering suppresses residual interference ($f_{BT}$*) from the lower auxiliary channel (126').

**6.** A method according to Claim 5,
**characterised in that** the bandpass filtering has a pass-band (135) that extends between a frequency (f) greater than the frequency ($f_{BT}$*=0 ; 133) to which the video carrier (BT*) of the lower auxiliary channel (126') has been converted and a frequency (f) smaller than half the sampling frequency ($f_s/2$; 134).

**7.** A method according to one of Claims 5 or 6,
**characterised in that** the bandpass filtering has a zero point (133) at the frequency ($f_{BT}$*=0) to which the video carrier (BT*) of the lower auxiliary channel (126') has been converted,
**and/or in that** the bandpass filtering has a zero point (134) at half the sampling frequency ($f_s/2$).

**8.** A method according to one of the preceding Claims,
**characterised in that** the in-phase signal (I) is low-pass filtered prior to the Hilbert filtering
**and/or in that** the quadrature signal (Q) is low-pass filtered prior to the Hilbert filtering.

**9.** A method according to Claim 8,
**characterised in that** the low-pass filtering of the in-phase signal (I) and/or the low-pass filtering of the quadrature signal (Q) suppresses unwanted mixing products around the second harmonic of the video carrier ($f_{BT}$) from the I/Q demodulation.

**10.** A method according to Claim 9,
**characterised in that** the low-pass filtering of the in-phase signal (I) has a pass-band (136) that extends up to a frequency (f) corresponding to a channel bandwidth (B) of the TV signal,
**and/or in that** the low-pass filtering of the quadrature signal (Q) has a pass-band (136) that extends up to a frequency (f) corresponding to a channel bandwidth (B) of the TV signal.

**11.** A method according to one of Claims 9 or 10,
**characterised in that** the low-pass filtering of the in-phase signal (I) has a zero point (139) at a frequency ($2f_{BT}$-B) corresponding to double the video carrier frequency ($2f_{BT}$) minus the channel bandwidth (B).

**12.** A method according to one of the preceding Claims,
**characterised in that** the Hilbert filtering suppresses interference products from an upper auxiliary channel (127'),

**and/or in that** the phase relationship, in particular the sign of the video signal and sound signal components in the in-phase signal (I) and in the quadrature signal (Q), are synchronized so as to produce the separation into the video output signal ($S_{video}$) and the sound output signal ($S_{sound}$) from the sum of the Hilbert-filtered in-phase signal ($I_H$) and from the Hilbert-filtered quadrature signal ($Q_H$), or from the difference between the Hilbert-filtered in-phase signal ($I_H$) and the Hilbert-filtered quadrature signal ($Q_H$).

13. A method according to Claim 12,
**characterised in that** the Hilbert filtering of the in-phase signal (I) has a pass-band (137) that extends up to an upper frequency (f) corresponding to the channel bandwidth (B),
**and/or in that** the Hilbert filtering of the quadrature signal (Q) has a pass-band (138a, 138b) that extends up to an upper frequency (f) corresponding to the channel bandwidth (B).

14. A method according to Claim 12 or 13,
**characterised in that** the Hilbert filtering of the quadrature signal (Q) has a pass-band (138a, 138b) that extends up to a lower frequency (f) corresponding to a residual bandwidth ($F_R$).

15. A method according to Claim 14,
**characterised in that** the Hilbert filtering of the quadrature signal (Q) between a frequency corresponding to a bandwidth (BB) of the video signal and a frequency corresponding to a channel bandwidth (B) has a transfer function ($H_Q=-A_Q$) with a sign inverted compared to the transfer function ($H_Q=A_Q$) between the residual frequency ($f_R$) and a frequency corresponding to a bandwidth (BB) of the video signal.

16. A method according to one of Claims 12 to 15,
**characterised in that** the Hilbert filtering of the in-phase signal (I) has a zero point (139) at a frequency ($2f_{BT}-B$) corresponding to double the video carrier frequency ($2f_{BT}$) minus the channel bandwidth (B),
**and/or in that** the Hilbert filtering of the quadrature signal (Q) has a zero point (139) at a frequency ($2f_{BT}-B$) corresponding to double the video carrier frequency ($2f_{BT}$) minus the channel bandwidth (B),
**and/or in that** the Hilbert filtering of the quadrature signal (Q) has a zero point (139) at a frequency corresponding to a bandwidth (BB) of the video signal.

17. A method according to one of the preceding Claims,
**characterised in that** the sound signal ($S_{sound}$') is high-pass filtered in order to obtain a filtered sound output signal ($S_{sound}$).

18. A method according to Claim 17,
**characterised in that** the high-pass filtering suppresses residual interference (TT*) from a lower auxiliary channel (126').

19. A circuit configuration for channel filtering of an analoguely or digitally modulated TV signal (125), comprising a video signal (125b), a sound signal (125a), and a video carrier signal (BT) having a video carrier frequency ($f_{BT}$) at which the TV signal (125) is converted to an intermediate frequency ($2^{nd}$ IF) generating an intermediate frequency signal ($S_{IF}$),
**characterised in that** an I/Q demodulator (3) is provided, which is designed to demodulate the intermediate frequency ($S_{IF}$) with a signal ($S(f_{BT}; 0°)$) at the video carrier frequency ($f_{BT}$) into an in-phase signal (I), and with a signal ($S(f_{BT}; 90°)$) shifted in phase by a phase angle n/2 relative to the signal ($S(f_{BT}; 0°)$) at the video carrier frequency ($f_{BT}$) into a quadrature signal (Q),
**in that** a Hilbert filter pair (HF-I, HF-Q) is provided with a first Hilbert filter (HF-I) having a even symmetrical pulse response ($h_I(L-n)=h_I(n)$) and a second Hilbert filter (HF-Q) having an uneven symmetrical pulse response ($h_Q(L-n)=-h_Q(n)$),
wherein the first Hilbert filter (HF-I) is designed to filter the in-phase signal (I) in order to obtain a Hilbert-filtered in-phase signal ($I_H$),
and wherein the second Hilbert filter (HF-Q) is designed to filter the quadrature signal (Q) in order to obtain a Hilbert-filtered quadrature signal ($Q_H$),
**in that** an adder (21) is provided, which is designed to add the Hilbert-filtered quadrature signal ($Q_H$) to the Hilbert-filtered in-phase signal ($I_H$) in order to obtain a video output signal ($S_{video}$),
**and/or in that** a subtractor (22) is provided, which is designed to subtract the Hilbert-filtered quadrature signal ($Q_H$) from the Hilbert-filtered in-phase signal ($I_H$) in order to obtain a sound output signal ($S_{sound}$').

**20.** A circuit configuration according to Claim 19,
**characterised in that** means are provided for generating the intermediate frequency signal ($S_{IF}$) by converting a video carrier (BT*) from a lower auxiliary channel (126, 126') to zero frequency ($f_{BT}$*=0) .

**21.** A circuit configuration according to one of Claims 19 or 20,
**characterised in that** a bandpass filter (BPF) is connected on the input side of the I/Q demodulator (3) in order to bandpass filter the intermediate frequency signal ($S_{IF}$) prior to the I/Q demodulation.

**22.** A circuit configuration according to Claim 21,
**characterised in that** the bandpass filter (BPF) is designed to perform bandpass filtering digitally at a sampling frequency ($f_s$).

**23.** A circuit configuration according to one of Claims 21 or 22,
**characterised in that** the bandpass filter (BPF) is designed to suppresses residual interference ($f_{BT}$*) from the lower auxiliary channel (126').

**24.** A circuit configuration according to Claim 23,
**characterised in that** the bandpass filter (BPF) has a pass-band (135) that extends between a frequency (f) that is greater than the frequency ($f_{BT}$*=0; 133) to which the video carrier (BT*) of the lower auxiliary channel (126') has been converted and a frequency (f) that is smaller than half the sampling frequency ($f_s$)/2; 134).

**25.** A circuit configuration according to one of Claims 23 or 24,
**characterised in that** the bandpass filter (BPF) has a zero point (133) at the frequency ($f_{BT}$*=0) to which the video carrier (BT*) of the lower auxiliary channel (126') has been converted,
and/or **in that** the bandpass filter (BPF) has a zero point (134) at half the sampling frequency ($f_s$/2).

**26.** A circuit configuration according to one of Claims 19 to 25,
**characterised in that** a low-pass filter (TPF-I) is provided, which is designed to filter the in-phase signal (I) prior to the Hilbert filtering,
**and/or in that** a low-pass filter (TPF-Q) is provided, which is designed to low-pass filter the quadrature signal (Q) prior to the Hilbert filtering.

**27.** A circuit configuration according to Claim 26,
**characterised in that** the low-pass filter (TPF-I) for the in-phase signal (I) and/or the low-pass filter (TPF-Q) for the quadrature signal (Q) is designed to suppress undesired mixing products around the second harmonic of the video carrier ($f_{BT}$) from the I/Q demodulation.

**28.** A circuit configuration according to Claim 27,
**characterised in that** the low-pass filter (TPF-I) for the in-phase signal (I) has a pass-band (136) that extends up to a frequency (f) corresponding to a channel bandwidth (B) of the TV signal,
**and/or in that** the low-pass filter (TPF-Q) for the quadrature signal (Q) has a pass-band (136) that extends up to a frequency (f) corresponding to a channel bandwidth (B) of the TV signal.

**29.** A circuit configuration according to one of Claims 27 or 28,
**characterised in that** the low-pass filter (TPF-I) for the in-phase signal (I) has a zero point (139) at a frequency ($2f_{BT}$–B) corresponding to double the video carrier frequency ($2f_{BT}$) minus the channel bandwidth (B).

**30.** A circuit configuration according to one of Claims 19 to 29,
**characterised in that** the Hilbert filter pair (HF-I, HF-Q) is designed to suppress interference products from an upper auxiliary channel (127'),
**and/or in that** the Hilbert filter pair (HF-I, HF-Q) is designed to synchronise the phase relationship, in particular, the sign, of video signal and sound signal components in the in-phase signal (I) and in the quadrature signal (Q) so as to produce separation into the video output signal ($S_{video}$) and the sound output signal ($S_{sound}$) from the sum of the Hilbert-filtered in-phase signal ($I_H$) and the Hilbert-filtered quadrature signal ($Q_H$), or from the difference taken between the Hilbert-filtered in-phase signal ($I_H$) and the Hilbert-filtered quadrature signal ($Q_H$).

**31.** A circuit configuration according to Claim 30,
**characterised in that** the Hilbert filter (HF-I) for the in-phase signal (I) has a pass-band (137) that extends up to an upper frequency (f) corresponding to the channel bandwidth (B),
**and/or in that** the Hilbert filter (HF-Q) for the quadrature signal (Q) has a pass-band (138a, 138b) that extends up to an upper frequency (f) corresponding to the channel bandwidth (B).

**32.** A circuit configuration according to Claim 30 or 31,
**characterised in that** the Hilbert filter (HF-Q) for the quadrature signal (Q) has a pass-band (138a, 138b) that extends up to a lower frequency (f) corresponding to a residual frequency ($f_R$).

**33.** A circuit configuration according to Claim 32,
**characterised in that** the Hilbert filter (HF-Q) for the quadrature signal (Q) between a frequency corresponding to a bandwidth (BB) of the video signal and a frequency corresponding to channel bandwidth (B) has a transfer function ($H_Q=-A_Q$) with the sign inverted compared to the transfer function ($H_Q=A_Q$) between the residual frequency ($f_R$) and a frequency corresponding to a bandwidth (BB) of the video signal.

**34.** A circuit configuration according to one of Claims 30 to 33,
**characterised in that** the Hilbert filter (HF-I) for the in-phase signal (I) has a zero point (139) at a frequency ($2f_{BT}$-B) corresponding to double the video carrier frequency ($2f_{BT}$) minus the channel bandwidth (B),
**and/or in that** the Hilbert filter (HF-Q) for the quadrature signal (Q) has a zero point (139) at a frequency ($2f_{BT}$-B) corresponding to double the video carrier frequency ($2f_{BT}$) minus the channel bandwidth (B),
**and/or in that** the Hilbert filter (HF-Q) for the quadrature signal (Q) has a zero point (139) at a frequency corresponding to a bandwidth (BB) of the video signal.

**35.** A circuit configuration according to one of Claims 19 to 34,
**characterised in that** a high-pass filter (HPF) is provided, which is designed to high-pass filter the sound output signal ($S_{sound}$') in order to obtain a filtered sound output signal ($S_{sound}$).

**36.** A circuit configuration according to Claim 35,
**characterised in that** the high-pass filter (HPF) is designed to suppress residual interference (TT*) from a lower auxiliary channel (126').

**Revendications**

**1.** Procédé de filtrage de canal d'un signal TV à modulation analogique ou numérique (125) comprenant un signal image (125b), un signal son (125a) et un signal de porteuse image (BT) avec une fréquence de porteuse image ($f_{BT}$), le signal TV (125) étant converti à une fréquence intermédiaire ($2^{nd}$ IF) pour former un signal de fréquence intermédiaire ($S_{IF}$),
**caractérisé en ce que**
le signal de fréquence intermédiaire ($S_{IF}$) est démodulé en mode 1/Q avec un signal ($S(f_{BT}; 0°)$) de fréquence de porteuse image ($f_{BT}$) en un signal en phase (I), et avec un signal ($S(f_{BT}; 90°)$) de fréquence de porteuse image ($f_{BT}$) déphasé d'un angle de $\pi/2$ par rapport au signal ($S(f_{BT}; 0°)$) en un signal déphasé en quadrature (Q), le signal en phase (I) est filtré au moyen d'un premier filtre de Hilbert (HF-I) présentant une réponse d'impulsion symétrique paire ($h_I$ (L-n) = $h_I$ (n)) d'une paire de filtres de Hilbert (HF-I, HF-Q), pour obtenir un signal en phase filtré par Hilbert ($I_H$), et le signal déphasé en quadrature (Q) est filtré au moyen d'un deuxième filtre de Hilbert (HF-Q) présentant une réponse d'impulsion symétrique impaire ($h_Q$ (L-n) = $h_Q$ (n)) d'une paire de filtres de Hilbert (HF-I, HF-Q), pour obtenir un --signal déphasé en- quadrature filtré-par Hilbert ($Q_H$), le signal déphasé en quadrature filtré par Hilbert ($Q_H$) est additionné au signal en phase filtré par Hilbert ($I_H$ pour obtenir un signal de sortie image (Svideo), et/ou du signal déphasé en quadrature filtré par Hilbert ($Q_H$) est soustrait au signal en phase filtré par Hilbert ($I_H$) pour obtenir un signal de sortie son (Ssound).

**2.** Procédé selon la revendication 1,
**caractérisé en ce que**
le signal de fréquence intermédiaire ($S_{IF}$) est formé par la conversion d'une porteuse image (BT*) d'un canal secondaire inférieur (126, 126') à la fréquence nulle ($f_{BT}$* = 0).

**3.** Procédé selon une des revendications 1 ou 2,
**caractérisé en ce que**
le signal de fréquence intermédiaire ($S_{IF}$) est filtré par un filtre passe-bande avant la démodulation I/Q.

**4.** Procédé selon la revendication 3,
**caractérisé en ce que**
le filtrage passe-bande est réalisé en mode numérique avec une fréquence d'échantillonnage ($f_s$).

**5.** Procédé selon une des revendications 3 ou 4,
**caractérisé en ce que**
des résidus parasites ($f_{BT}^*$) sont supprimés du canal secondaire inférieur (126') par le filtrage passe-bande.

**6.** Procédé selon la revendication 5,
**caractérisé en ce que**
le filtrage passe-bande présente une zone passante (135) qui s'étend entre une fréquence (f) supérieure à la fréquence ($f_{BT}^* = 0$; 133) à laquelle la porteuse image (BT*) du canal secondaire inférieur (126') a été convertie et une fréquence (f) inférieure à la moitié de la fréquence d'échantillonnage ($f_s/2$; 134).

**7.** Procédé selon une des revendications 5 ou 6,
**caractérisé en ce que**
le filtrage passe-bande présente un point nul (133) à la fréquence ($f_{BT}^* = 0$) à laquelle la porteuse image (BT*) du canal secondaire inférieur (126') a été convertie, et/ou le filtrage passe-bande présente un point nul (134) à la moitié de la fréquence d'échantillonnage ($f_s/2$).

**8.** Procédé selon une des revendications précédentes,
**caractérisé en ce que**
le signal en phase (I) est filtré par un filtre passe-bas avant le filtrage de Hilbert, et/ou le signal déphasé en quadrature (Q) est filtré par un filtre passe-bas avant le filtrage de Hilbert.

**9.** Procédé selon la revendication 8,
**caractérisé en ce que**
des produits mixtes non souhaités sont réduits de la deuxième harmonique de la porteuse image ($f_{BT}$) de la démodulation I/Q par le filtrage passe-bas du signal en phase (I) et/ou par le filtrage passe-bas du signal déphasé en quadrature (Q).

**10.** Procédé selon la revendication 9,
**caractérisé en ce que**
le filtrage passe-bas du signal en phase (I) présente une zone passante (136) qui s'étend jusqu'à une fréquence (f) qui correspond à une largeur de bande de canal (B) du signal TV, et/ou le filtrage passe-bas déphasé en quadrature (Q) présente une zone passante (136) qui s'étend jusqu'à une fréquence (f) qui correspond à une largeur de bande de canal (B) du signal TV.

**11.** Procédé selon une des revendications 9 ou 10,
**caractérisé en ce que**
le filtrage passe-bas du signal en phase (I) présente un point nul (139) à une fréquence ($2f_{BT} - B$) qui correspond au double de la fréquence de porteuse image ($2f_{BT}$) moins la largeur de bande de canal (B).

**12.** Procédé selon une des revendications précédentes,
**caractérisé en ce que**
les produits parasites d'un canal secondaire supérieur (127') sont supprimés par le filtrage de Hilbert, et/ou les rapports de phase, en particulier les polarités des composantes de signal image et son du signal en phase (I) et du signal déphasé en quadrature (Q) sont harmonisés entre eux de telle sorte que la séparation en signal de sortie image ($S_{Video}$) et signal de sortie son ($S_{Sound}$) résulte de la somme du signal en phase filtré par Hilbert ($I_H$) et du signal déphasé en quadrature filtré par Hilbert ($Q_H$), ou de la différence du signal en phase ($I_H$) et du signal déphasé en quadrature filtré par Hilbert ($Q_H$).

**13.** Procédé selon la revendication 12,
**caractérisé en ce que**
le filtrage de Hilbert du signal en phase (I) présente une zone passante (137) qui s'étend jusqu'à une fréquence supérieure (f) qui correspond à la largeur de bande de canal (B), et/ou le filtrage de Hilbert du signal déphasé en quadrature (Q) présente une zone passante (138a, 138b) qui s'étend jusqu'à une fréquence supérieure (f) qui correspond à la largeur de bande de canal (B).

**14.** Procédé selon une des revendications 12 ou 13,
**caractérisé en ce que**
le filtrage de Hilbert du signal déphasé en quadrature (Q) présente une zone passante (138a, 138b) qui s'étend jusqu'à une fréquence inférieure (f) qui correspond à une largeur de bande résiduelle ($f_R$).

**15.** Procédé selon la revendication 14,
**caractérisé en ce que**
le filtrage de Hilbert du signal déphasé en quadrature (Q) présente, entre une fréquence qui correspond à une largeur de bande (BB) du signal image et une fréquence qui correspond à une la largeur de bande de canal (B), une fonction de transfert ($H_Q = -A_Q$) de polarité inverse de celle de la fonction de transfert ($H_Q = A_Q$) entre la fréquence résiduelle ($f_R$) et une fréquence qui correspond à une largeur de bande (BB) du signal image.

**16.** Procédé selon une des revendications 12 à 15,
**caractérisé en ce que**
le filtrage de Hilbert du signal en phase (I) présente un point nul (139) à une fréquence ($2f_{BT}- B$) qui correspond au double de la fréquence de porteuse image ($2f_{BT}$) moins la largeur de bande de canal (B), et/ou le filtrage de Hilbert du signal déphasé en quadrature (Q) présente un point nul (139) à une fréquence ($2f_{BT} - B$) qui correspond au double de la fréquence de porteuse image ($2f_{BT}$) moins la largeur de bande de canal (B), et/ou le filtrage de Hilbert du signal déphasé en quadrature (Q) présente un point nul (139) à une fréquence qui correspond à une la largeur de bande (BB) du signal image.

**17.** Procédé selon une des revendications précédentes,
**caractérisé en ce que**
le signal de sortie son ($S_{Sound}$') est filtré par un filtre passe-haut pour obtenir in signal de sortie son filtré ($S_{Sound}$).

**18.** Procédé selon la revendication 17,
**caractérisé en ce que**
des résidus parasites (TT*) sont supprimés d'un canal secondaire inférieur (126') par le filtrage passe-haut.

**19.** Montage de circuit pour le filtrage de canal d'un signal TV à modulation analogique ou numérique (125) comprenant un signal image (125b), un signal son (125a) et un signal de porteuse image (BT) avec une fréquence de porteuse image ($f_{BT}$), dans lequel le signal TV (125) est converti à une fréquence intermédiaire (2nd IF) formant un signal de fréquence intermédiaire ($S_{IF}$),
**caractérisé en ce qu'**
un démodulateur I/Q (3) est prévu pour démoduler le signal de fréquence intermédiaire ($S_{IF}$) avec un signal ($S(f_{BT}; 0°)$) de fréquence de porteuse image ($f_{BT}$) en un signal en phase (I) et avec un signal ($S(f_{BT}; 90°)$) de fréquence de porteuse image ($f_{BT}$) déphasé d'un angle de $\pi/2$ par rapport au signal ($S(f_{BT}; 0°)$) en un signal déphasé en quadrature (Q), une paire de filtres de Hilbert (HF-I, HF-Q) comprend un premier filtre de Hilbert (HF-I) présentant une réponse d'impulsion symétrique paire ($h_I (L-n)= h_I (n)$) et un deuxième filtre de Hilbert (HF-Q) présentant une réponse d'impulsion symétrique impaire ($h_Q (L-n) = h_Q (n)$), le premier filtre de Hilbert (HF-I) étant conçu pour filtrer le signal en phase (I) pour obtenir un signal en phase filtré par Hilbert (In) et le deuxième filtre de Hilbert (HF-Q) étant conçu pour filtrer le signal déphasé en quadrature (Q) pour obtenir un signal déphasé en quadrature filtré par Hilbert ($Q_H$), un additionneur (21) est prévu pour additionner le signal déphasé en quadrature filtré par Hilbert ($Q_H$) au signal en phase filtré par Hilbert ($I_H$) pour obtenir un signal de sortie image (Svideo), et/ou un soustracteur (22) est prévu pour soustraire le signal déphasé en quadrature filtré par Hilbert ($Q_H$) du signal en phase filtré par Hilbert ($I_H$) pour obtenir un signal de sortie son (Ssound).

**20.** Montage de circuit selon la revendication 19,
**caractérisé par**
un moyen pour former le signal de fréquence intermédiaire ($S_{IF}$) par la conversion d'une porteuse image (BT*) d'un canal secondaire inférieur (126, 126') à la fréquence nulle ($f_{BT}^* = 0$).

**21.** Montage de circuit selon une des revendications 19 ou 20,
**caractérisé en ce qu'**
en amont du démodulateur I/Q (3) est monté un filtre passe-bande (BPF) pour filtrer par filtre passe-bande le signal de fréquence intermédiaire ($S_{IF}$) avant la démodulation I/Q.

**22.** Montage de circuit selon la revendication 21,

**caractérisé en ce que**
le filtre passe-bande (BPF) est conçu pour réaliser le filtrage passe-bande en mode numérique avec une fréquence d'échantillonnage ($f_s$).

**23.** Montage de circuit selon une des revendications 21 ou 22,
**caractérisé en ce que**
le filtre passe-bande (BPF) est conçu pour supprimer des résidus parasites ($f_{BT}$*) du canal secondaire inférieur (126').

**24.** Montage de circuit selon la revendication 23,
**caractérisé en ce que**
le filtre passe-bande (BPF) présente une bande passante (135) qui s'étend entre une fréquence (f) supérieure à la fréquence ($f_{BT}$* = 0; 133) à laquelle la porteuse image (BT*) du canal secondaire inférieur (126') a été convertie et une fréquence (f) inférieure à la moitié de la fréquence d'échantillonnage ($f_s/2$; 134).

**25.** Montage de circuit selon une des revendications 23 ou 24,
**caractérisé en ce que**
le filtre passe-bande (BPF) présente un point nul (133) à la fréquence ($f_{BT}$* = 0) à laquelle la porteuse image ($BT^*$) du canal secondaire inférieur (126') a été convertie, et/ou le filtrage passe-bande présente un point nul (134) à la moitié de la fréquence d'échantillonnage ($f_s/2$).

**26.** Montage de circuit selon une des revendications 19 à 25,
**caractérisé en ce qu'**
un filtre passe-bas (TPF-I) est prévu pour filtrer par filtre passe-bas le signal en phase (I) avant le filtrage de Hilbert, et/ou un filtre passe-bas (TPF-Q) est prévu pour filtrer par filtre passe-bas le signal déphasé en quadrature (Q) avant le filtrage de Hilbert.

**27.** Montage de circuit selon la revendication 26,
**caractérisé en ce que**
le filtre passe-bas (TPF-I) pour le signal en phase (I) et/ou le filtre passe-bas (TPF-Q) pour le signal déphasé en quadrature (Q) sont conçus pour réduire des produits mixtes non souhaités de la deuxième harmonique de la porteuse image ($f_{BT}$) de la démodulation I/Q.

**28.** Montage de circuit selon la revendication 27,
**caractérisé en ce que**
le filtre passe-bas (TPF-I) pour le signal en phase (I) présente une zone passante (136) qui s'étend jusqu'à une fréquence (f) qui correspond à une largeur de bande de canal (B) du signal TV, et/ou le filtre passe-bas (TPF-Q) pour le signal déphasé en quadrature (Q) présente une zone passante (136) qui s'étend jusqu'à une fréquence (f) qui correspond à une largeur de bande de canal (B) du signal TV.

**29.** Montage de circuit selon une des revendications 27 ou 28,
**caractérisé en ce que**
le filtre passe-bas (TPF-I) pour le signal en phase (I) présente un point nul (139) à une fréquence ($2f_{BT}$ - B) qui correspond au double de la fréquence de porteuse image ($2f_{BT}$) moins la largeur de bande de canal (B).

**30.** Montage de circuit selon une des revendications 19 à 29,
**caractérisé en ce que**
la paire de filtres de Hilbert (HF-I, HF-Q) est conçue pour supprimer des produits parasites d'un canal secondaire supérieur (127'), et/ou la paire de filtres de Hilbert (HF-I, HF-Q) est conçue pour harmoniser entre eux les rapports de phase, en particulier les polarités des composantes de signal image et son du signal en phase (I) et du signal déphasé en quadrature (Q), de telle sorte que la séparation en signal de sortie image ($S_{Video}$) et signal de sortie son ($S_{Sound}$) résulte de la somme du signal en phase filtré par Hilbert ($I_H$) et du signal déphasé en quadrature filtré par Hilbert ($Q_H$), ou de la différence du signal en phase ($I_H$) et du signal déphasé en quadrature filtré par Hilbert ($Q_H$).

**31.** Montage de circuit selon la revendication 30,
**caractérisé en ce que**
le filtre de Hilbert (HF-I) du signal en phase (I) présente une zone passante (137) qui s'étend jusqu'à une fréquence supérieure (f) qui correspond à la largeur de bande de canal (B), et/ou le filtre de Hilbert (HF-Q) du signal déphasé en quadrature (Q) présente une zone passante (138a, 138b) qui s'étend jusqu'à une fréquence supérieure (f) qui correspond à la largeur de bande de canal (B).

32. Montage de circuit selon la revendication 30 ou 31,
**caractérisé en ce que**
le filtre de Hilbert (HF-Q) du signal déphasé en quadrature (Q) présente une zone passante (138a, 138b) qui s'étend jusqu'à une fréquence inférieure (f) qui correspond à une fréquence résiduelle ($f_R$).

33. Montage de circuit selon la revendication 32,
**caractérisé en ce que**
le filtre de Hilbert (HF-Q) du signal déphasé en quadrature (Q) présente, entre une fréquence qui correspond à une largeur de bande (BB) du signal image et une fréquence qui correspond à une la largeur de bande de canal (B), une fonction de transfert ($H_Q = -A_Q$) de polarité inverse de celle de la fonction de transfert ($H_Q = A_Q$) entre la fréquence résiduelle ($f_R$) et une fréquence qui correspond à une largeur de bande (BB) du signal image.

34. Montage de circuit selon une des revendications 30 à 33,
**caractérisé en ce que**
le filtre de Hilbert (HF-I) du signal en phase (I) présente un point nul (139) à une fréquence ($2f_{BT} - B$) qui correspond au double de la fréquence de porteuse image ($2f_{BT}$) moins la largeur de bande de canal (B), et/ou le filtre de Hilbert (HF-Q) du signal déphasé en quadrature (Q) présente un point nul (139) à une fréquence ($2f_{BT} - B$) qui correspond au double de la fréquence de porteuse image ($2f_{BT}$) moins la largeur de bande de canal (B), et/ou le filtre de Hilbert (HF-Q) du signal déphasé en quadrature (Q) présente un point nul (139) à une fréquence qui correspond à une la largeur de bande (BB) du signal image.

35. Montage de circuit selon une des revendications 19 à 34,
**caractérisé en ce qu'**
un filtre passe-haut (HPF) est prévu pour filtrer par filtre passe-haut le signal de sortie son ($S_{Sound}$') pour obtenir un signal de sortie son filtré ($S_{Sound}$).

36. Montage de circuit selon la revendication 35,
**caractérisé en ce que**
le filtre passe-haut (HPF) est conçu pour supprimer des résidus parasites (TT*) d'un canal secondaire inférieur (126').

FIG 1

EP 1 657 917 B1

FIG 2 (Stand der Technik)

FIG 3 (Stand der Technik)

EP 1 657 917 B1

FIG 4a

FIG 4b

FIG 5a

FIG 5b

## FIG 6

$H_{BPF}$

135

0    $f_S/2$    f

133    134

## FIG 7

$H_{TPF-I}$
$H_{TPF-Q}$

136

$2f_{BT}-B$

0    B    f

139

## FIG 8

$H_I$    $A_I(f)$    137

B    f

139

$H_Q$    $A_Q(f)$    138a

BB    B

$f_R$    f

141    140    138b

# FIG 9

# FIG 10

# FIG 11

FIG 12

$I_H$-Signal

BT

$B_1$

$\pi^*/2$

$\pi/2$

0

$B_2/2$

$f_1$     $f^*_{\pi 2}$ $f^{\ddagger}_{\pi 1}$     $f_2$     $f_{\pi 2}$ $f_{\pi 1}$     $f$

FIG 13

$Q_H$-Signal

0

$B_2/2$

$\pi^+/2$     $f_2$

$\pi/2$

$f^{\ddagger}_{\pi 2}$  $f^{\ddagger}_{\pi 1}$     $f_{\pi 2}$ $f_{\pi 1}$     $f$

FIG 14

$S_{Video} = (I_H + Q_H)$

BT

$B_1$

$B_2$

0

$f_1$     $f_2$     $f$

## FIG 15

$$S_{Sound} = (I_H - Q_H)$$

## FIG 16

$$S_{Sound} = H_{HPF} (I_H - Q_H)$$

Störungsreste sind
mit HPF
unterdrückt